# EUROPÄISCHE PATENTSCHRIFT

(11) **EP 4 367 783 B1**
(45) Veröffentlichungstag und Bekanntmachung des Hinweises auf die Patenterteilung: **04.09.2024**
(21) Anmeldenummer: 22765053.8
(22) Anmeldetag: 11.08.2022
(51) Int. Cl.: H02K 41/02, H02K 41/03, B65G 54/02

(54) **PLANARANTRIEBSSYSTEM**
PLANAR DRIVE SYSTEM
SYSTÈME D'ENTRAÎNEMENT PLAN

(30) Priorität: 19.08.2021 DE 102021121530
(43) Veröffentlichungstag der Anmeldung: 15.05.2024
(73) Patentinhaber: Beckhoff Automation GmbH, 33415 Verl (DE)
(72) Erfinder: BECKHOFF, Hans, 33415 Verl (DE); BECKHOFF, Johannes, 33758 Schloß Holte-Stukenbrock (DE); ACHTERBERG, Jan, 47249 Duisburg (DE); SENSEN, Dominik, 33647 Bielefeld (DE); BENTFELD, Lukas, 33129 Delbrück (DE); SCHULTE, Felix, 33397 Rietberg (DE); PRUESSMEIER, Uwe, 32657 Lemgo (DE)
(74) Vertreter: Patentanwaltskanzlei WILHELM & BECK
(86) Internationale Anmeldenummer: PCT/EP2022/072517
(87) Internationale Veröffentlichungsnummer: WO 2023/020926

(56) Entgegenhaltungen:
- WO-A1-2018/176137
- WO-A1-2020/243814
- DE-A1- 102014 214 696

## Beschreibung

Die Erfindung betrifft ein Planarantriebssystem und ein Verfahren zum Betreiben eines Planarantriebssystems.

Diese Patentanmeldung beansprucht die Priorität der deutschen Patentanmeldung DE 10 2021 121 530.7,

Planarantriebssysteme können unter anderem in der Automatisierungstechnik, insbesondere der Fertigungstechnik, der Handhabungstechnik und der Verfahrenstechnik eingesetzt werden. Mittels Planarantriebssystemen kann ein bewegliches Element einer Anlage oder Maschine in mindestens zwei linear unabhängigen Richtungen bewegt oder positioniert werden. Planarantriebssysteme können einen permanent erregten elektromagnetischen Planarmotor mit einem planaren Stator und einen auf dem Stator in mindestens zwei Richtungen beweglichen Läufer umfassen. Dabei kann der planare Stator in beliebigen Einbaulagen eingebaut sein und beispielsweise der Läufer oberhalb des Stators, auf eine Normalrichtung zum Erdmittelpunkt hin bezogen, angeordnet sein. Das bedeutet, dass der Läufer beim Ausschalten des Planarantriebssystems auf dem Stator abgesetzt werden kann und so auf dem Stator gehalten werden kann. Es sind jedoch auch andere Einbaulagen denkbar, bei denen der Läufer mittels durch den Stator erzeugten Magnetkräften am Stator gehalten wird, und dabei eine Gewichtskraft des Läufers durch eine Magnetkraft ausgeglichen wird. Ein solches Planarantriebsystem ist aus WO 2018176137 A1 bekannt.

Bei einem permanent erregten elektromagnetischen Planarmotor wird dadurch eine Antriebskraft auf den Läufer ausgeübt, dass bestromte Spulengruppen einer Statoreinheit mit Antriebsmagneten mehrerer Magnetanordnungen des Läufers magnetisch wechselwirken. Aus dem Stand der Technik sind Planarantriebssysteme mit rechteckigen und längsgestreckten Spulengruppen und rechteckigen und längsgestreckten Magnetanordnungen des Läufers bekannt. Ein solches Planarantriebssystem wird beispielsweise in der Offenlegungsschrift DE 10 2017 131 304 A1 beschrieben. Mit einem solchen Planarantriebssystem wird insbesondere eine lineare und translative Bewegung des Läufers möglich. Das bedeutet, dass mittels eines solchen Planarantriebssystems der Läufer oberhalb einer Statorfläche, unter der die rechteckigen und längsgestreckten Spulengruppen angeordnet sind, parallel zur Statorfläche frei beweglich und senkrecht zur Statorfläche zumindest in verschiedenen Abständen zur Statorfläche bewegt werden kann. Ferner ist ein solches Planarantriebssystem in der Lage, den Läufer um einige Grad zu kippen und um einige Grad zu rotieren. Die letztgenannten Bewegungen sind dabei oberhalb von beliebigen Punkten der Statorfläche durchführbar. Dadurch, dass der Läufer um einige Grad gekippt oder rotiert werden kann, steht ein Planarantriebssystem mit für die meisten Anwendungen ausreichenden Freiheitsgraden zur Verfügung. Es kann jedoch sein, dass der Einsatzzweck des Planarantriebssystems weitere Bewegungen erfordert, die mittels eines Läufers des Planarantriebssystems so nicht ausgeführt werden können.

Es ist eine Aufgabe der Erfindung, ein Planarantriebssystem bereitzustellen, mit dem grö-βere Freiheitsgrade der Bewegung von auf Läufern angeordneten Objekten ermöglicht werden. Es ist eine weitere Aufgabe der Erfindung, ein entsprechendes Betriebsverfahren für ein solches Planarantriebssystem anzugeben.

Diese Aufgaben werden mit dem Planarantriebssystem und dem Verfahren zum Betreiben eines Planarantriebssystems der unabhängigen Patentansprüche gelöst. Vorteilhafte Weiterbildungen sind jeweils in abhängigen Patentansprüchen angegeben.

Ein Planarantriebssystem weist zumindest eine Statoreinheit mit jeweils einer Mehrzahl von Spulengruppen zum Erzeugen eines Statormagnetfelds, eine Statorfläche oberhalb der Statoreinheit sowie einen ersten Läufer und einen zweiten Läufer auf. Der erste Läufer und der zweite Läufer weisen jeweils eine Mehrzahl von Magneteinheiten zum Erzeugen eines Läufermagnetfelds auf. Der erste Läufer und der zweite Läufer sind oberhalb der Statorfläche mittels einer Wechselwirkung des Statormagnetfelds mit dem Läufermagnetfeld zumindest in einer ersten Richtung und einer zweiten Richtung bewegbar. Dabei kann vorgesehen sein, dass eine oder mehrere Statoreinheiten in einem Statormodul angeordnet sind und die Statorfläche eine zusammenhängende Fläche der Statormodule bzw. der Statoreinheiten bildet. Die Statorfläche kann dabei insbesondere im Wesentlichen zweidimensional in der ersten Richtung und der zweiten Richtung ausgestaltet sein, sodass der erste Läufer und der zweite Läufer im Wesentlichen parallel zur Statorfläche bewegt werden können. Ferner ist im erfindungsgemäßen Planarantriebssystem eine Koppelvorrichtung zwischen dem ersten Läufer und dem zweiten Läufer angeordnet, mit der eine Verbindung zwischen dem ersten Läufer und dem zweiten Läufer ausbildbar ist. Das Planarantriebssystem weist ferner eine Steuereinheit auf, wobei die Steuereinheit eingerichtet ist, Steuersignale an die Statoreinheit auszugeben. Die Steuereinheit kann ferner eingerichtet sein, Signale von in den Statormodulen angeordneten Magnetfeldsensoren zu empfangen und diese Signale für eine Positionsbestimmung des ersten Läufers beziehungsweise zweiten Läufers zu nutzen. Sind mehrere Statoreinheiten vorhanden, können die Steuersignale an mehrere Statoreinheiten ausgegeben werden. Sind eine oder mehrere Statoreinheiten in einem Statormodul angeordnet, kann vorgesehen sein, dass die Ausgabe der Steuerbefehle an die Statoreinheiten als eine Ausgabe von Steuerbefehlen an die Statormodule ausgestaltet ist. Die Statoreinheit ist eingerichtet, die Spulengruppen anhand der Steuersignale derart zu bestromen, dass mittels des Statormagnetfelds zueinander hinsichtlich der Koppelvorrichtung koordinierte Bewegungen des ersten Läufers und des zweiten Läufers ausgeführt werden.

Durch die koordiniert ausgeführte Bewegung ist es möglich, ein auf dem ersten Läufer und/oder ein auf dem zweiten Läufer angeordnetes Objekt gegebenenfalls in Freiheitsgraden zu bewegen, die mit dem ersten Läufer oder dem zweiten Läufer jeweils für sich alleine so nicht möglich wären. Die koordinierte Bewegung kann ferner dann, wenn die Verbindung zwischen dem ersten Läufer und dem zweiten Läufer ausgebildet ist, umfassen, die Spulengruppen derart zu bestromen, dass ein Gesamtsystem bestehend aus dem ersten Läufer und dem zweiten Läufer bewegt wird, ohne individuell unterschiedliche Bewegungen des ersten Läufers und des zweiten Läufers durchzuführen.

Die Statormodule können ein Statormodulgehäuse umfassen, wobei die Statoreinheiten der Statormodule jeweils innerhalb der Statormodulgehäuse angeordnet sind.

In einer Ausführungsform ist die Verbindung im Betrieb lösbar und die Statoreinheit eingerichtet, die Spulengruppen anhand der Steuersignale derart zu bestromen, dass die Verbindung gelöst werden kann und wieder ausgebildet werden kann. In dieser Ausführungsform ist das Planarantriebssystem eingerichtet, den ersten Läufer und den zweiten Läufer mittels der Koppelvorrichtung miteinander zu verbinden und die dabei entstehende Verbindung im Betrieb ebenfalls wieder zu lösen. Dadurch können beispielsweise im Rahmen des Einsatzes des Planarantriebssystems in der Automatisierungstechnik Bewegungen eines Objekts auf beispielsweise dem ersten Läufer in Freiheitsgraden, die ohne eine Kopplung des ersten Läufers mit dem zweiten Läufer nicht möglich wären, bewegt werden.

In einer Ausführungsform kann die Steuereinheit in einem ersten Betriebsmodus und in einem zweiten Betriebsmodus betrieben werden. Im ersten Betriebsmodus werden die Steuersignale anhand einer Koppelungsinformation derart ausgegeben, dass die bestehende Verbindung des ersten Läufers und des zweiten Läufers berücksichtigt wird. Im zweiten Betriebsmodus werden die Steuersignale anhand einer Entkoppelungsinformation derart ausgegeben, dass der erste Läufer und der zweite Läufer individuell bewegt werden. Im ersten Betriebsmodus ist also die Verbindung zwischen dem ersten Läufer und dem zweiten Läufer ausgebildet und die Steuersignale werden für eine gemeinsame, koordinierte Bewegung des ersten Läufers und des zweiten Läufers ausgegeben. Im zweiten Betriebsmodus ist die Verbindung zwischen dem ersten Läufer und dem zweiten Läufer gelöst und die Steuersignale werden derart ausgegeben, dass der erste Läufer und der zweite Läufer individuell und unabhängig voneinander bewegt werden können.

In einer Ausführungsform weist der erste Läufer ein erstes Koppelelement und der zweite Läufer ein zweites Koppelelement auf. Das erste Koppelelement und das zweite Koppelelement sind Teil der Koppelvorrichtung. Zwischen dem ersten Koppelelement und dem zweiten Koppelelement kann eine formschlüssige Verbindung und/oder eine mechanisch kraftschlüssige Verbindung und/oder eine magnetisch kraftschlüssige Verbindung ausgebildet werden. Dabei kann vorgesehen sein, dass die formschlüssige Verbindung und/oder die mechanisch kraftschlüssige Verbindung und/oder die magnetisch kraftschlüssige Verbindung dadurch ausgebildet werden, dass der erste Läufer und der zweite Läufer auf eine vorgegebene Weise relativ zueinander bewegt werden, bis die entsprechende Verbindung ausgebildet ist. Zunächst wird die Steuereinheit dabei also im zweiten Betriebsmodus betrieben, bei dem der erste Läufer und der zweite Läufer individuell bewegt werden können. Nach Ausbilden der Verbindung kann dann in den ersten Betriebsmodus der Steuereinheit gewechselt werden und der erste Läufer und der zweite Läufer können gemeinsam koordiniert bewegt werden.

In einer Ausführungsform stellen das erste Koppelelement und das zweite Koppelelement eine mechanische Kopplung zwischen dem ersten Läufer und dem zweiten Läufer bereit. In einer Ausführungsform stellen das erste Koppelelement und das zweite Koppelelement eine magnetische Kopplung zwischen dem ersten Läufer und dem zweiten Läufer bereit. Dabei kann beispielsweise auch vorgesehen sein, dass das erste Koppelelement und das zweite Koppelelement sowohl eine mechanische als auch eine magnetische Kopplung bereitstellen.

In einer Ausführungsform umfasst das erste Koppelelement eine Ausnehmung und das zweite Koppelelement einen zur Ausnehmung passenden beziehungsweise komplementären Vorsprung. Die Verbindung wird dadurch ausgebildet, dass der Vorsprung in die Ausnehmung eingesetzt wird. Das Einsetzen des Vorsprungs in die Ausnehmung kann dabei durch eine koordinierte Bewegung des ersten Läufers und des zweiten Läufers relativ zueinander erfolgen.

In einer Ausführungsform kann zum Lösen der Verbindung der erste Läufer und/oder der zweite Läufer aus einer durch die erste Richtung und die zweite Richtung definierten Ebene gekippt werden. Dadurch wird es beispielsweise möglich, dass mittels des Vorsprungs und der Ausnehmung eine formschlüssige Verbindung des ersten Läufers und des zweiten Läufers in der durch die erste Richtung und zweite Richtung definierten Ebene ermöglicht ist und eine Bewegung des ersten Läufers oder des zweiten Läufers in dieser Ebene aufgrund der formschlüssigen Verbindung zu einer Bewegung des jeweiligen anderen Läufers führt. Das Lösen der Verbindung kann dabei dadurch erfolgen, dass der erste Läufer und/oder der zweite Läufer entsprechend aus der Ebene heraus gekippt werden und dadurch der Vorsprung aus der Ausnehmung entfernt wird. Der erste Läufer und der zweite Läufer können dann voneinander wegbewegt und anschließend wieder in eine Normallage parallel zur Statorfläche gekippt werden, sodass der erste Läufer und der zweite Läufer dann wieder individuell und unabhängig voneinander bewegt werden können.

In einer Ausführungsform können der erste Läufer und der zweite Läufer zum Lösen der Verbindung entgegengesetzt zueinander gekippt werden.

In einer Ausführungsform ist das erste Koppelelement in ein erstes umlaufendes Randelement des ersten Läufers integriert und das zweite Koppelelement ist in ein zweites umlaufendes Randelement des zweiten Läufers integriert.

In einer Ausführungsform umfassen das erste Koppelelement und das zweite Koppelelement Magnete. In einer Ausführungsform sind die Magnete des ersten Koppelelements und/oder die Magnete des zweiten Koppelelements drehbar gelagert. Sind die Magnete drehbar gelagert, kann dabei eine Koppelvorrichtung bereitgestellt werden, bei der die drehbar gelagerten Magnete sich, wenn der erste Läufer und der zweite Läufer zueinander bewegt werden, derart in eine Position drehen, dass zwischen den Magneten eine entsprechende magnetische Kraft zwischen dem ersten Läufer und dem zweiten Läufer ausgebildet wird, die zu einer Verbindung des ersten Läufers und des zweiten Läufers führt. Alternativ können die Magnete auch auf vorgegebenen Positionen fest installiert sein, wobei in diesem Fall gegebenenfalls Einschränkungen hinsichtlich der Koppelbarkeit in Kauf genommen werden müssen.

In einer Ausführungsform ist die Koppelvorrichtung eingerichtet, durch eine Bewegung des zweiten Läufers relativ zum ersten Läufer eine Bewegung eines auf dem ersten Läufer angeordneten Elements auszulösen. Der zweite Läufer kann also dazu genutzt werden, über die Koppelvorrichtung eine Bewegung mechanisch auf ein Element des ersten Läufers zu übertragen. Dies kann dabei sowohl mit lösbaren als auch mit nicht-lösbaren Verbindungen zwischen dem ersten Läufer und dem zweiten Läufer erfolgen.

Ferner wird ein Verfahren zum Betreiben eines solchen Planarantriebssystems bereitgestellt, wobei das Planarantriebssystem die bereits genannten Eigenschaften aufweist. Die Steuereinheit gibt in diesem Planarantriebssystem Steuersignale an die Statoreinheit aus, und die Statoreinheit bestromt die Spulengruppen anhand der Steuersignale derart, dass mittels des Statormagnetfelds zueinander koordinierte Bewegungen des ersten Läufers und des zweiten Läufers ausgeführt werden.

In einer Ausführungsform des Verfahrens wird die Verbindung im Betrieb gelöst, wobei die Statoreinheit die Spulengruppen anhand der Steuersignale derart bestromt, dass die Verbindung gelöst und wieder ausgebildet wird.

In einer Ausführungsform des Verfahrens kann die Steuereinheit in einem ersten Betriebsmodus und in einem zweiten Betriebsmodus betrieben werden. Im ersten Betriebsmodus werden die Steuersignale anhand einer Kopplungsinformation derart ausgegeben, dass die Verbindung des ersten Läufers und des zweiten Läufers berücksichtigt wird. Im zweiten Betriebsmodus werden die Steuersignale anhand einer Entkoppelungsinformation derart ausgegeben, dass der erste Läufer und der zweite Läufer individuell bewegt werden.

Die Erfindung wird anhand der beigefügten Figuren näher erläutert. Hierbei zeigen:
- Fig. 1: ein Planarantriebssystem;
- Fig. 2: zwei Läufer eines Planarantriebssystems mit einer mechanischen Koppelvorrichtung;
- Fig. 3: zwei Läufer eines Planarantriebssystems mit einer weiteren mechanischen Koppelvorrichtung;
- Fig. 4: eine Seitenansicht eines Planarantriebssystems mit Läufern mit mechanischen Koppelvorrichtungen;
- Fig. 5: zwei Läufer eines Planarantriebssystems mit einer weiteren mechanischen Koppelvorrichtung;
- Fig. 6: eine Seitenansicht eines Planarantriebssystems mit zwei Läufern mit einer weiteren mechanischen Koppelvorrichtung;
- Fig. 7: eine Seitenansicht eines Planarantriebssystems mit Läufern mit einer weiteren mechanischen Koppelvorrichtung;
- Fig. 8: eine Draufsicht auf ein Planarantriebssystem mit Läufern mit einer magnetischen Koppelvorrichtung;
- Fig. 9: eine Seitenansicht eines Planarantriebssystems;
- Fig. 10: eine Seitenansicht eines Planarantriebssystems;
- Fig. 11: eine Draufsicht auf ein Planarantriebssystem;
- Fig. 12: eine Draufsicht auf ein Planarantriebssystem;
- Fig. 13: eine Draufsicht auf ein Planarantriebssystem;
- Fig. 14: eine Draufsicht auf ein Planarantriebssystem;
- Fig. 15: eine Seitenansicht eines Planarantriebssystems;
- Fig. 16: eine Draufsicht auf ein Planarantriebssystem;
- Fig. 17: eine Draufsicht auf ein Planarantriebssystem;
- Fig. 18: eine Draufsicht auf ein Planarantriebssystem;
- Fig. 19: eine isometrische Ansicht zweier Läufer eines Planarantriebssystems;
- Fig. 20: eine Draufsicht auf zwei Läufer eines Planarantriebssystems;
- Fig. 21: eine Seitenansicht eines Planarantriebssystems;
- Fig. 22: eine Seitenansicht eines Planarantriebssystems;
- Fig. 23: eine Seitenansicht eines Planarantriebssystems;
- Fig. 24: eine Seitenansicht eines Planarantriebssystems;
- Fig. 25: eine Seitenansicht eines Planarantriebssystems;
- Fig. 26: eine Seitenansicht eines Planarantriebssystems; und
- Fig. 27: eine Seitenansicht eines Planarantriebssystems.

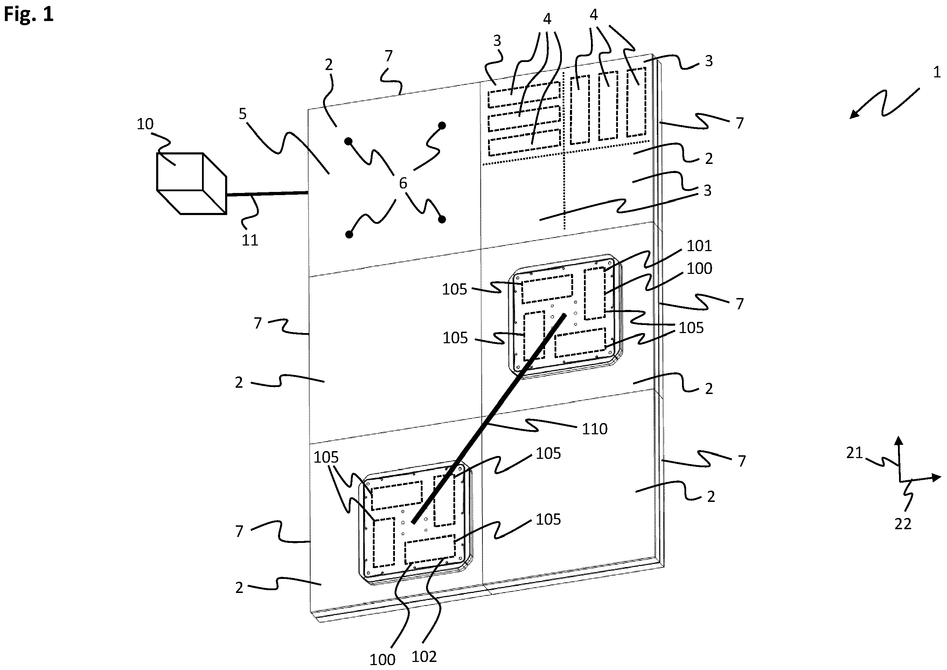

Fig. 1 zeigt ein Planarantriebssystem 1, welches sechs Statormodule 2 aufweist. Die Statormodule 2 sind derart angeordnet, dass ein Rechteck von zwei auf drei Statormodulen 2 gebildet ist. Auch andere Anordnungen der Statormodule 2 sind denkbar, es können auch mehr oder weniger als sechs Statormodule 2 angeordnet werden. Im oben rechts dargestellten Statormodul 2 ist ein Innenleben des Statormoduls 2 skizziert, wobei das Statormodul 2 vier Statoreinheiten 3 umfasst, wobei die vier Statoreinheiten 3 innerhalb eines Statormoduls 2 in einer quadratischen 2-auf-2-Anordnung angeordnet sind. Ferner ist für zwei Statoreinheiten 3 dargestellt, dass die Statoreinheiten 3 Spulengruppen 4 umfassen, wobei die Spulengruppen 4 mit unterschiedlicher Ausrichtung dargestellt sind. Die Spulengruppen 4 dienen zum Erzeugen eines Statormagnetfelds. Die Spulengruppen 4 sind in der dargestellten Ausführungsform als rechteckige und längsgestreckte Spulengruppen 4 ausgestaltet, können jedoch auch anders ausgestaltet sein. In jeder Statoreinheit 3 der Statormodule 2 sind jeweils drei einzelne, rechteckige und längsgestreckte Spulen in einer Spulengruppe 4 dargestellt. Ebenso könnte bei einer nicht dargestellten Ausführungsform eine andere Anzahl an einzelnen rechteckigen und längsgestreckten Spulen eine Spulengruppe 4 bilden. Dabei orientiert sich eine Längserstreckung der Spulen parallel zu einer der Kanten der jeweiligen Statoreinheit 3. Unterhalb jeder dargestellten Spulengruppen 4 sind weitere Spulen vorhanden, die in Bezug auf ihre Längserstreckung eine um 90 Grad gedrehte Orientierung aufweisen. Dieses Raster aus längsgestreckten und rechteckigen Spulengruppen 4 kann mehrfach übereinander ausgebildet sein. Real sind weder Statoreinheiten 3 noch Spulengruppen 4 sichtbar, da sie von einem Statormodulgehäuse 7 des Statormoduls 2 umgeben sind.

Die sechs Statormodule 2 bilden eine zusammenhängende Statorfläche 5 oberhalb der Statoreinheiten 3. Die Statorfläche 5 wird dabei durch die Statormodulgehäuse 7 begrenzt. Ferner ist eine Steuereinheit 10 angeordnet, die mit einer Datenleitung 11 mit einem der Statormodule 2 verbunden ist. Zwischen den Statormodulen 2 kann ebenfalls eine (nicht dargestellte) Kommunikationsverbindung ausgebildet sein. Die Steuereinheit 10 ist eingerichtet, Steuersignale über die Datenleitung 11 an die Statormodule 2 bzw. die Statoreinheiten 3 innerhalb der Statormodule 2 auszugeben und die Statoreinheiten 3 sind eingerichtet, die Spulengruppen 4 anhand der Steuersignale zu bestromen. Dabei ist, auch wenn in den anderen Statormodulen 2 keine Statoreinheiten 3 oder Spulengruppen 4 dargestellt sind, jedes Statormodul 2 mit Statoreinheiten 3 und Spulengruppen 4 ausgestattet. Durch die Bestromung können die Spulengruppen 4 ein Statormagnetfeld bereitstellen, wobei mittels des Statormagnetfelds Läufer 100 oberhalb der Statorfläche 5 bewegt werden können.

In Fig. 1 sind zwei Läufer 100 dargestellt, ein erster Läufer 101 sowie ein zweiter Läufer 102. Sowohl im ersten Läufer 101 als auch im zweiten Läufer 102 sind Magneteinheiten 105 angedeutet, die in der in Fig. 1 gewählten isometrischen Ansicht nicht sichtbar sind, sondern die innerhalb des ersten Läufers 101 sowie des zweiten Läufers 102 angeordnet sind. Die Magneteinheiten 105 erzeugen ein Läufermagnetfeld. Zum Antrieb der Läufer 100 oberhalb der Statorfläche 5 kann das Läufermagnetfeld mit dem durch die Spulengruppen 4 erzeugten Statormagnetfeld wechselwirken und so den Läufer 100 entsprechend antreiben. Mittels der Wechselwirkung des durch die Spulengruppen 4 erzeugten Statormagnetfelds und des durch die Magneteinheiten 105 erzeugten Läufermagnetfelds können die Läufer 100 zumindest in einer ersten Richtung 21 und in einer zweiten Richtung 22 bewegt werden. Die erste Richtung 21 und die zweite Richtung 22 stehen dabei senkrecht aufeinander und sind in einer durch die Statorfläche 5 definierten Ebene angeordnet. In gewissem Maß können die Läufer 100 auch senkrecht zur ersten Richtung 21 und zur zweiten Richtung 22 bewegt werden. Ferner können die Läufer 100 an beliebigen Positionen oberhalb der Statorfläche 5 um einige Grad gedreht und um einige Grad aus einer Ruhelage parallel zur Statorfläche 5 verkippt werden. Der erste Läufer 101 und der zweite Läufer 102 sind mittels einer Koppelvorrichtung 110 miteinander verbunden. Die Koppelvorrichtung 110 ist also zwischen dem ersten Läufer 101 und dem zweiten Läufer 102 angeordnet. Mittels der Koppelvorrichtung 110 ist eine Verbindung zwischen dem ersten Läufer 101 und dem zweiten Läufer 102 ausbildbar.

Die Steuereinheit 10 gibt die Steuersignale an die Statoreinheiten 3 bzw. die Statormodule 2 derart aus, dass die Spulengruppen 4 anhand der Steuersignale derart bestromt werden, dass mittels des Statormagnetfelds zueinander hinsichtlich der Koppelvorrichtung 110 koordinierte Bewegungen des ersten Läufers 101 und des zweiten Läufers 102 ausgeführt werden. Da der erste Läufer 101 und der zweite Läufer 102 durch die Koppelvorrichtung 110 verbunden sind, ist es notwendig, im Betrieb des Planarantriebssystems 1 die Bewegungen des ersten Läufers 101 und des zweiten Läufers 102 zu koordinieren und so insgesamt ein verbessertes Planarantriebssystem 1 mit mittels der Koppelvorrichtung 110 verbundenen Läufern 100 bereitzustellen.

Im oben links dargestellten Statormodul 2 ist skizziert, dass die Statormodule 2 Magnetfeldsensoren 6 aufweisen können, mittels denen ein Magnetfeld bestimmt werden kann. Die Magnetfeldsensoren 6 sind insbesondere eingerichtet, die Läufermagnetfelder der Magneteinheiten 105 zu ermitteln und entsprechende Messignale an die Steuereinheit 10 auszugeben. Mittels dieser Messsignale kann eine Position der Läufer 100 von der Steuereinheit 10 bestimmt werden.

In einem Ausführungsbeispiel ist die durch die Koppelvorrichtung 110 bereitgestellte Verbindung des ersten Läufers 101 mit dem zweiten Läufer 102 im Betrieb lösbar. Die Statoreinheiten 3 bzw. die Statormodule 2 sind eingerichtet, die Spulengruppen 4 anhand der Steuersignale derart zu bestromen, dass die Verbindung zwischen dem ersten Läufer 101 und dem zweiten Läufer 102 gelöst werden kann und wieder ausgebildet werden kann.

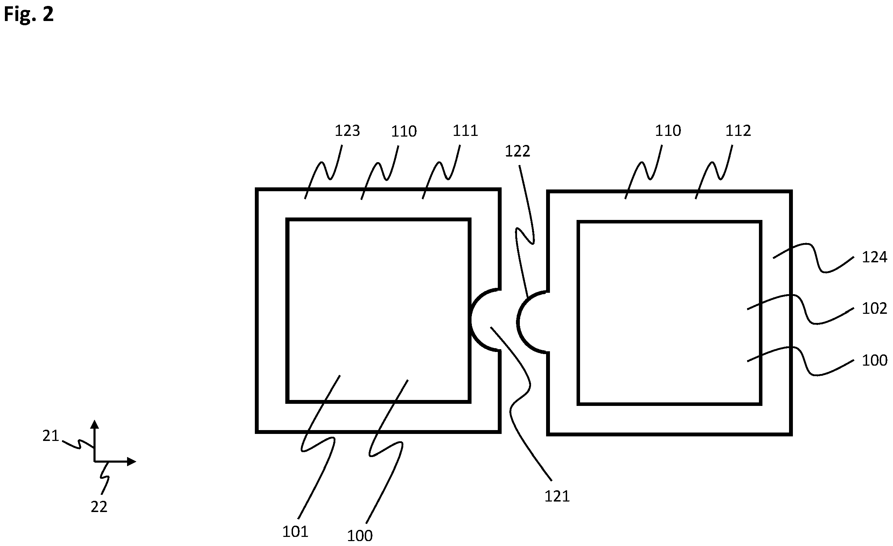

Fig. 2 zeigt eine Draufsicht auf einen ersten Läufer 101 und einen zweiten Läufer 102, bei der die Koppelvorrichtung 110 derart ausgestaltet ist, dass der erste Läufer 101 und der zweite Läufer 102 so bewegt werden können, dass die Verbindung zwischen dem ersten Läufer 101 und dem zweiten Läufer 102 ausgebildet werden kann und wieder gelöst werden kann. Der erste Läufer 101 umfasst dabei ein erstes Koppelelement 111, welches Teil der Koppelvorrichtung 110 ist. Der zweite Läufer 102 umfasst ein zweites Koppelelement 112, welches ebenfalls Teil der Koppelvorrichtung 110 ist. Zwischen dem ersten Koppelelement 111 und dem zweiten Koppelelement 112 kann nun eine formschlüssige Verbindung und/oder eine mechanisch kraftschlüssige Verbindung ausgebildet werden. Das erste Koppelelement 111 weist hierzu eine Ausnehmung 121 auf. Das zweite Koppelelement 112 weist einen zur Ausnehmung 121 passenden Vorsprung 122 auf. Die Verbindung zwischen dem ersten Läufer 101 und dem zweiten Läufer 102 wird dadurch ausgebildet, dass der Vorsprung 122 in die Ausnehmung 121 eingesetzt wird. Ferner können auch mehr als eine Ausnehmung 121 und mehr als ein Vorsprung 122 vorgesehen sein.

Im Ausführungsbeispiel der Fig. 2 sind sowohl die Ausnehmung 121 als auch der Vorsprung 122 halbkreisförmig. Dabei kann vorgesehen sein, dass der zweite Läufer 102 in der zweiten Richtung 22 auf den ersten Läufer 101 zubewegt wird und dadurch der Vorsprung 122 in die Ausnehmung 121 eingesetzt wird. Nun ist die Verbindung zwischen dem ersten Läufer 101 und dem zweiten Läufer 102 zumindest in der ersten Richtung 21 durch eine formschlüssige Verbindung stabil und eine Bewegung des ersten Läufers 101 in die erste Richtung 21 führt automatisch auch zu einer Bewegung des zweiten Läufers 102 in die erste Richtung 21, sofern unterhalb des zweiten Läufers 102 kein entgegengesetztes Antriebsmagnetfeld ausgebildet ist. Insbesondere können die Antriebsmagnetfelder derart ausgebildet werden, dass sich der erste Läufer 101 und der zweite Läufer 102 gemeinsam bewegen.

Die in Fig. 1 gezeigte Steuereinheit 10 kann für die in Fig. 2 gezeigten Läufer 100 in einem ersten Betriebsmodus und in einem zweiten Betriebsmodus betrieben werden. Im ersten Betriebsmodus können die Steuersignale anhand einer Kopplungsinformation derart ausgegeben werden, dass die Verbindung des ersten Läufers 101 und des zweiten Läufers 102 berücksichtigt wird. Im zweiten Betriebsmodus werden anhand einer Entkoppelungsinformation die Steuersignale derart ausgegeben, dass der erste Läufer 101 und der zweite Läufer 102 individuell bewegt werden. Die Steuereinheit 10 geht also im ersten Betriebsmodus davon aus, dass der erste Läufer 101 und der zweite Läufer 102 gekoppelt sind, und gibt die Steuersignale zur Bestromung der Spulengruppen 4 entsprechend aus. Eine Information über den ersten Betriebsmodus und den zweiten Betriebsmodus erfolgt dabei mittels in einem der Statormodule 2 in Fig. 1 gezeigten Magnetfeldsensoren 6, wobei die Magnetfeldsensoren 6 die Magnetfelder der der Magneteinheiten 105 detektieren und so die Position des ersten Läufers 101 bzw. des zweiten Läufers 102 bestimmen können. Wenn alle Statormodule 2 solche Magnetfeldsensoren 6 aufweisen und eine Abmessung der Koppelvorrichtung 110 bekannt ist, können aus den Positionsdaten der Läufer 100 Rückschlüsse über eine Kopplung bzw. Entkoppelung getroffen werden. Ferner kann auch eine Information darüber, ob eine Kopplung bzw. Entkoppelung des ersten Läufers 101 und des zweiten Läufers 102 vorliegt, in einem auf dem ersten Läufer 101 oder zweiten Läufer 102 angeordneten Speicher abgelegt sein und mittels drahtloser Datenkommunikation an die Steuereinheit 10 übertragen werden.

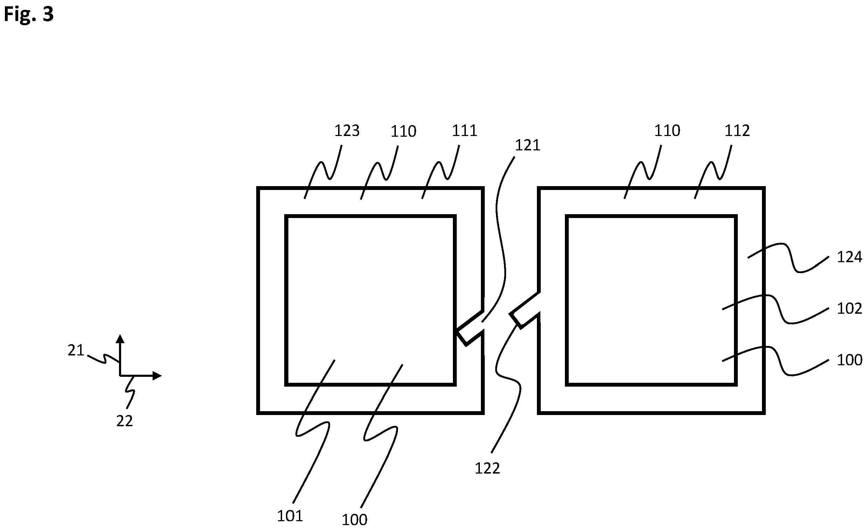

Fig. 3 zeigt weitere zwei Läufer 100 mit einer Koppelvorrichtung 110, die wie die Koppelvorrichtung der Fig. 2 aufgebaut ist, sofern im Folgenden keine Unterschiede beschrieben sind. Die Ausnehmung 121 und der Vorsprung 122 weisen in Fig. 3 eine andere Form auf und sind insbesondere zur ersten Richtung 21 und zur zweiten Richtung 22 jeweils schräg angeordnet. Somit ergibt sich in gekoppeltem Zustand, also wenn der Vorsprung 122 des zweiten Läufers 102 in die Ausnehmung 121 des ersten Läufers 101 eingesetzt wird, eine mechanische Verbindung, die sowohl in der ersten Richtung 21 als auch in der zweiten Richtung 22 zumindest teilweise formschlüssig und zumindest teilweise mechanisch kraftschlüssig ist, da einerseits eine Reibekraft zwischen der Ausnehmung 121 und dem Vorsprung 122 und auch die Form von Ausnehmung 121 und Vorsprung 122 zum Kraftübertrag vom ersten Läufer 101 auf den zweiten Läufer 102 genutzt werden können. Nur durch eine Bewegung parallel zum Vorsprung 122 kann die Verbindung zwischen erstem Läufer 101 und zweitem Läufer 102 wieder gelöst werden.

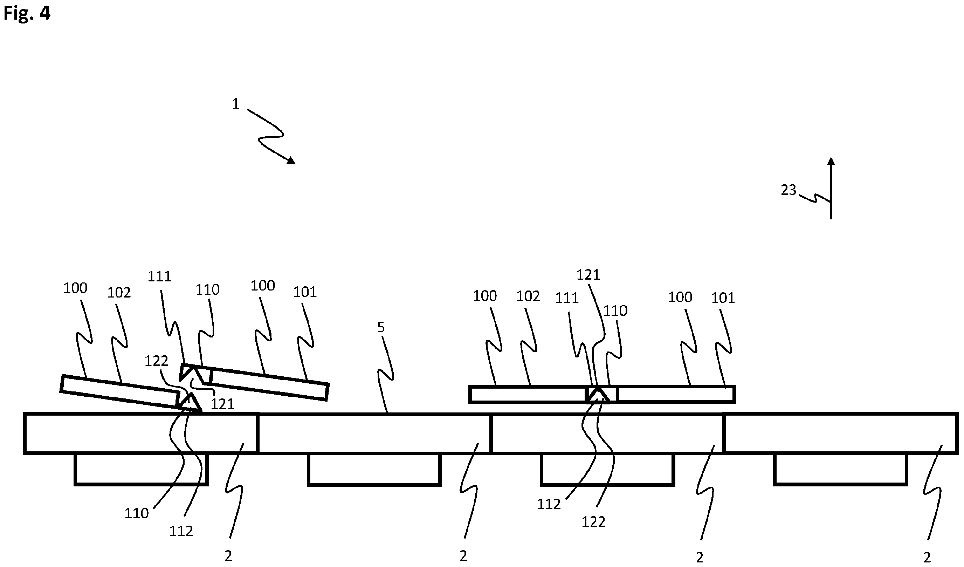

Fig. 4 zeigt eine Seitenansicht eines Planarantriebssystems 1 mit zwei ersten Läufern 101 und zwei zweiten Läufern 102. Im linken Bereich der Darstellung der Fig. 4 sind ein erster Läufer 101 und ein zweiter Läufer 102 in entkoppeltem Zustand bzw. im Zustand kurz vor der Kopplung dargestellt. Die Koppelvorrichtung 110 umfasst wieder ein erstes Koppelelement 111 des ersten Läufers 101 und ein zweites Koppelelement 112 des zweiten Läufers 102. Das erste Koppelelement 111 umfasst wieder eine Ausnehmung 121, das zweite Koppelelement 112 umfasst einen Vorsprung 122. Die Ausnehmung 121 und der Vorsprung 122 sind dabei derart angeordnet, dass ein Einsetzen des Vorsprungs 122 in die Ausnehmung 121 nicht möglich ist, wenn der erste Läufer 101 und der zweite Läufer 102 parallel zur Statorfläche 5 stehen. Werden jedoch der erste Läufer 101 und/oder der zweite Läufer 102 aus einer Lage parallel zur Statorfläche 5 verkippt, so können der erste Läufer 101 und der zweite Läufer 102 anschließend aufeinander zu bewegt werden derart, dass der Vorsprung 122 unterhalb der Ausnehmung 121 angeordnet ist und ein Verbringen des ersten Läufers 101 und/oder des zweiten Läufers 102 in eine Ruhelage parallel zur Statorfläche 5 zu einem Einsetzen des Vorsprungs 122 in die Ausnehmung 121 führt. Dieser Zustand ist für die beiden in der Darstellung der Fig. 4 rechts dargestellten Läufer 100 zu sehen.

Beim Koppelmechanismus der Fig. 4 werden sowohl der erste Läufer 101 als auch der zweite Läufer 102 aus der Ruhelage verkippt. Es kann jedoch auch vorgesehen sein, dass nur der erste Läufer 101 oder nur der zweite Läufer 102 zum Ausbilden oder Lösen der Verbindung aus der Ruhelage gekippt werden soll. Ist die Verbindung, wie für die beiden Läufer 100 rechts in der Darstellung der Fig. 4, mittels der Koppelvorrichtung 110 ausgebildet, so können der erste Läufer 101 und der zweite Läufer 102 parallel zur Statorfläche 5 gemeinsam bewegt werden, ohne dass die Bewegung eines der beiden Läufer 100 dazu führt, dass die Verbindung sich wieder löst. Ferner können Antriebskräfte für den ersten Läufer 101 und den zweiten Läufer 102 kombiniert werden.

Die Ausnehmung 121 und der Vorsprung 122 in Fig. 4 sind mit dreieckigem Querschnitt dargestellt. Es sind jedoch auch andere Querschnitte für die Ausnehmung 121 und den Vorsprung 122 denkbar. Zum Ausbilden oder zum Lösen der Verbindung zwischen dem ersten Läufer 101 und dem zweiten Läufer 102 im Planarantriebssystem 1 der Fig. 4 werden der erste Läufer 101 und der zweite Läufer 102 entgegengesetzt zueinander gekippt. Das bedeutet, dass im Bereich der Koppelvorrichtung 110, also insbesondere im Bereich des ersten Koppelelements 111 und des zweiten Koppelelements 112 der erste Läufer 101 bezogen auf eine dritte Richtung 23 senkrecht zur Statorfläche 5 von der Statorfläche 5 wegbewegt wird und der zweite Läufer 102 im Bereich des zweiten Koppelelements 112 bezogen auf die dritte Richtung 23 zur Statorfläche 5 hinbewegt wird.

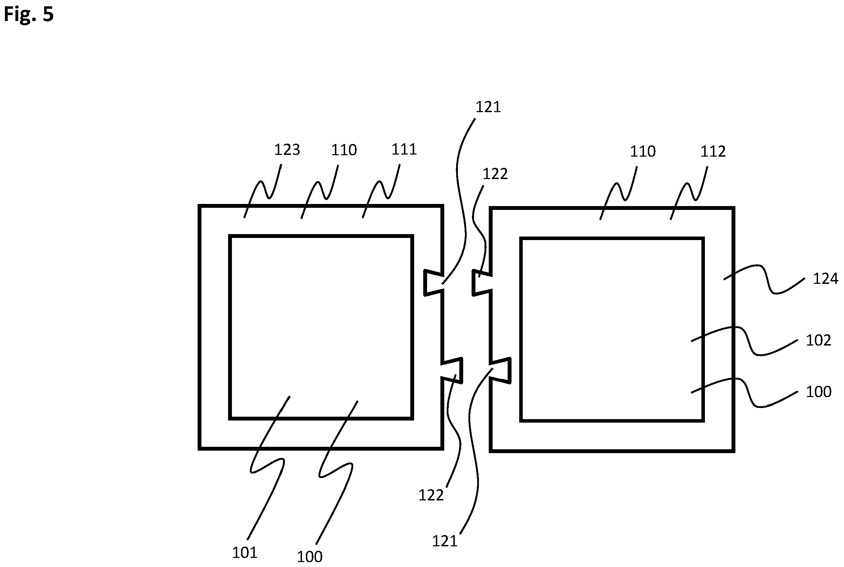

Fig. 5 zeigt eine Draufsicht auf zwei weitere Läufer 100, die den Läufern 100 der Figuren 2 bis 3 entsprechen, sofern im Folgenden keine Unterschiede beschrieben sind. Das erste Koppelelement 111 weist in diesem Fall sowohl eine Ausnehmung 121 als auch einen Vorsprung 122 auf. Das zweite Koppelelement 112 weist ebenfalls eine Ausnehmung 121 und einen Vorsprung 122 auf. Die Ausnehmung 121 des ersten Koppelelements 111 passt dabei zum Vorsprung 122 des zweiten Koppelelements 112. Die Ausnehmung 121 des zweiten Koppelelements 112 passt zum Vorsprung 122 des ersten Koppelelements 111. Sowohl die Ausnehmungen 121 als auch die Vorsprünge 122 sind in diesem Fall schwalbenschwanzförmig ausgestaltet, sodass ebenfalls ein Mechanismus analog zur

Fig. 4 gewählt werden kann, um den ersten Läufer 101 und den zweiten Läufer 102 miteinander zu verbinden, indem die Läufer 100 entgegengesetzt zueinander gekippt werden und anschließend aufeinander zu bewegt werden und dann durch ein Wieder-in-die-horizontale-Lage-Bringen die Ausnehmungen 121 die Vorsprünge 122 aufnehmen. Alternativ kann auch vorgesehen sein, in den Ausführungsbeispielen der Figuren 4 und 5 den ersten Läufer 101 und den zweiten Läufer 102 vor dem Ausbilden der Verbindung bezogen auf die dritte Richtung 23 in unterschiedlichen Ebenen zu bewegen.

Die in Zusammenhang mit den Figuren 2 bis 5 erläuterten Koppelvorrichtungen 110 können dabei Teil eines um die Läufer 100 umlaufenden Randbereichs sein. In den Figuren 2 bis 5 wurde auch jeweils nur eine Verbindungsmöglichkeit zu einem weiteren Läufer 100 dargestellt, es kann jedoch auch vorgesehen sein, dass Ausnehmungen 121 bzw. Vorsprünge 122 umlaufend um die Läufer 100 angeordnet sind, um nach dem Ausbilden der Verbindung zwischen dem ersten Läufer 101 und dem zweiten Läufer 102 weitere Läufer mechanisch zu verbinden. Ferner kann auch eine Verbindung zwischen dem ersten Läufer 101 und dem zweiten Läufer 102 gelöst werden und dann der erste Läufer 101 oder der zweite Läufer 102 mit einem weiteren Läufer verbunden werden. Die Verbindungen können dabei sowohl in der ersten Richtung 21 als auch in der zweiten Richtung 22 erfolgen. Durch die mechanisch verbundenen Läufer 100 kann dabei insbesondere ein Planarantriebssystem 1 mit einer erhöhten Tragkraft bereitgestellt werden, da insgesamt die Tragkraft von Magneteinheiten 105 mehrerer Läufer 100 genutzt werden kann.

In den Ausführungsbeispielen der Figuren 2, 3 und 5 ist dabei dargestellt, dass das erste Koppelelement 111 optional in ein erstes umlaufendes Randelement 123 des ersten Läufers 101 integriert und das zweite Koppelelement 112 optional in ein zweites umlaufendes Randelement 124 des zweiten Läufers 102 integriert.

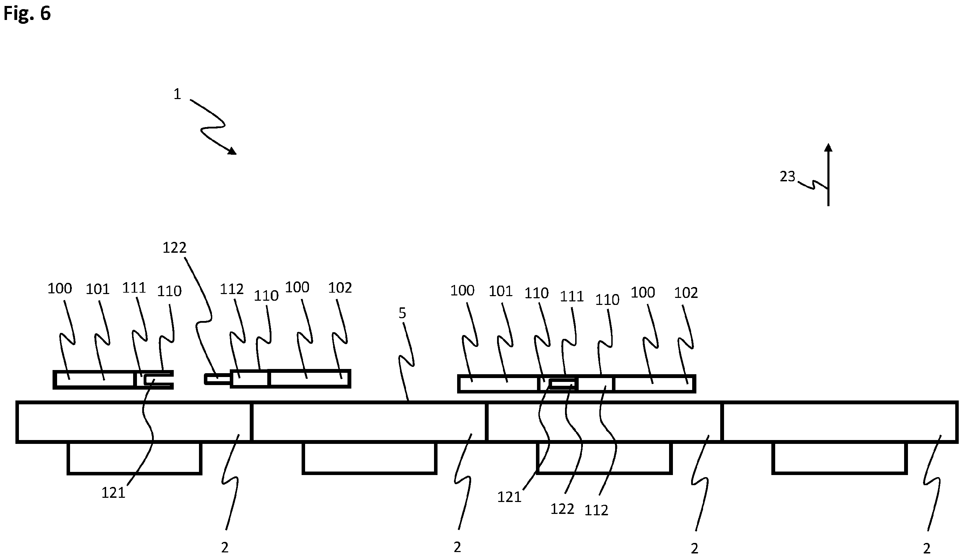

Fig. 6 zeigt eine Seitenansicht eines Planarantriebssystems 1, bei dem ebenfalls ein erster Läufer 101 mit einem zweiten Läufer 102 verbunden werden kann. In dem linken Abschnitt der Darstellung der Fig. 6 sind dabei der erste Läufer 101 und der zweite Läufer 102 getrennt voneinander. Die Koppelvorrichtung 110 weist wieder ein erstes Koppelelement 111 des ersten Läufers 101 und ein zweites Koppelelement 112 des zweiten Läufers 102 auf, wobei das erste Koppelelement 111 wieder eine Ausnehmung 121 und das zweite Koppelelement 112 wieder einen Vorsprung 122 aufweist. Die Ausnehmung 121 ist dabei eine Passstiftbohrung und der Vorsprung 122 ein Passstift. Der Vorsprung 122 kann wieder parallel in die Ausnehmung 121 eingesetzt werden und führt dann zu der im rechten Bereich der Fig. 6 gezeigten Verbindung zwischen dem ersten Läufer 101 und dem zweiten Läufer 102. Dadurch sind der erste Läufer 101 und der zweite Läufer 102 insbesondere in der dritten Richtung 23 miteinander verbunden.

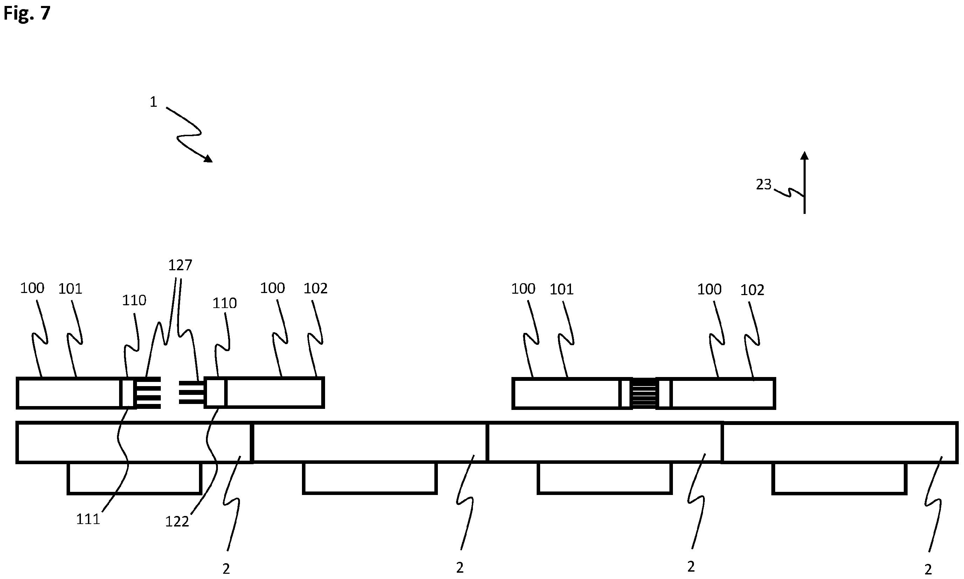

Fig. 7 zeigt eine Seitenansicht eines Planarantriebssystems 1, bei dem das erste Koppelelement 111 und das zweite Koppelelement 112 eine zueinander passende Kammstruktur 127 aufweisen, wobei die Kammstruktur 127 ebenfalls wieder durch Passstifte oder durch flache Plättchen gebildet sein kann. Auch hier kann wieder eine in die dritte Richtung 23 stabile Verbindung des ersten Läufers 101 und des zweiten Läufers 102 erfolgen.

In den Ausführungsbeispielen der Figuren 4, 6 und 7 ist dargestellt, dass das erste Koppelelement 111 und das zweite Koppelelement 112 nicht Teil eines jeweiligen umlaufenden Randelements des jeweiligen Läufers 100 sind. Selbstverständlich kann dies jedoch auch für die jeweils beiden Läufer 100 der Ausführungsbeispiele der Figuren 4, 6 und 7 so vorgesehen werden, wie beispielsweise in den Figuren 2, 3 und 5 dargestellt.

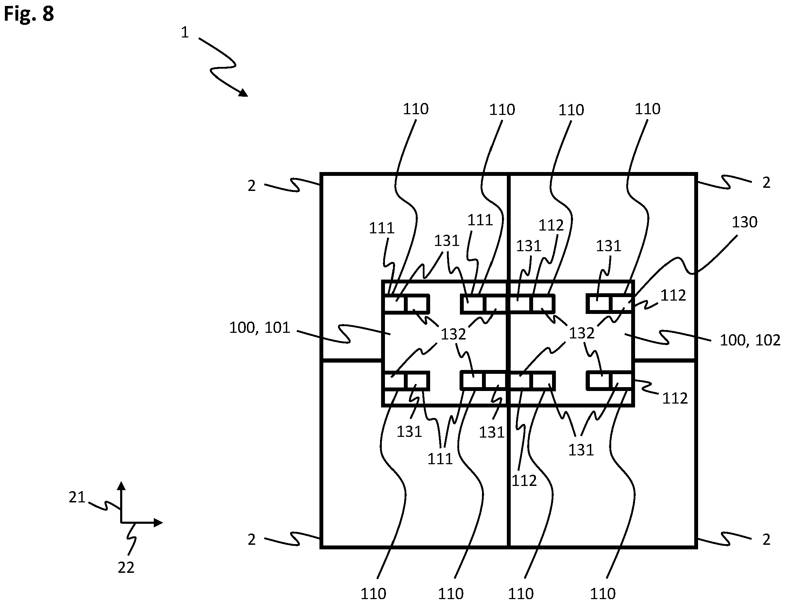

Fig. 8 zeigt eine Draufsicht auf ein Planarantriebssystem 1, bei dem ein erster Läufer 101 und ein zweiter Läufer 102 miteinander verbunden sind. Das erste Koppelelement 111 und das zweite Koppelelement 112 umfassen in diesem Fall Magnete 130. Das erste Koppelelement 111 des ersten Läufers 101 umfasst vier Magnete 130, genauso wie das zweite Koppelelement 112 des zweiten Läufers 102. Die Magnete 130 weisen jeweils einen Nordpol 131 und einen Südpol 132 auf. Die Magnete 130 sind auf den Läufern 100 derart angeordnet, dass jeweils Nordpole 131 und Südpole 132 der Koppelvorrichtung 110 bei aneinandergrenzenden Läufern 100 ebenfalls aneinandergrenzen und so eine magnetische Kraft und damit eine magnetisch kraftschlüssige Verbindung zwischen dem ersten Läufer 101 und dem zweiten Läufer 102 ausgebildet werden kann. In Fig. 8 sind die Magnete 130 dabei nur derart angeordnet, dass eine Verbindung in der zweiten Richtung 22 ausgebildet wird. In der zweiten Richtung 22 weisen die Läufer 100 dabei jeweils in dem anderen Läufer 100 zugewandten Randbereichen zwei Magnete 130 auf. Es können jedoch auch nicht dargestellte und in die erste Richtung 21 weisende Magnete zusätzlich oder alternativ vorgesehen sein. Die Magnete 130 können auch schaltbar, beispielsweise ausgeführt als Elektromagnete, ausgestaltet sein. Alternativ können die Magnete 130 einen Permanentmagnet und einen Elektromagnet umfassen, wobei mittels des Elektromagnets ein Magnetfeld des Permanentmagnets aufgehoben werden kann und damit der Magnet 130 "ausgeschaltet" werden kann.

In einem Ausführungsbeispiel sind die Magnete 130 des ersten Koppelelements 111 und/oder des zweiten Koppelelements 112 drehbar gelagert. Sind die Magnete 130 drehbar gelagert, kann ein System bereitgestellt werden, bei dem durch ein Bewegen des ersten Läufers 101 und des zweiten Läufers 102 relativ zueinander derart, dass die Magnete 130 des ersten Läufers 101 in den Einflussbereich der Magnete 130 des zweiten Läufers 102 kommen und sich aufgrund der Drehbarkeit derart tastend ausrichten, dass eine magnetisch kraftschlüssige Verbindung zwischen dem ersten Läufer 101 und dem zweiten Läufer 102 bereitgestellt wird. Ein solches System ist im Einsatz besonders flexibel.

Dabei kann es insgesamt vorgesehen sein, dass, sollte die Kraft eines Paares von Magneten 130 nicht ausreichen oder auch die Kraft von zwei Paaren von Magneten 130 (wie in Fig. 8 dargestellt) nicht ausreichen, die Anzahl der Magnete 130 auf den Läufern 100 erhöht wird. Entgegen der Darstellung der Fig. 8 können die Magnete 130 ebenfalls wieder in das erste Randelement 123 bzw. das zweite Randelement 124 der Läufer 100 integriert werden.

Die Magnete 130 des Ausführungsbeispiels der Fig. 8 können zusätzlich zu den mechanischen Verbindungsmöglichkeiten der Läufer 100 der Figuren 2 bis 7 vorgesehen werden. Werden sowohl mechanische als auch magnetische Verbindungen vorgesehen, kann dadurch eine besonders stabile Anordnung des ersten Läufers 101 und des zweiten Läufers 102 bereitgestellt werden.

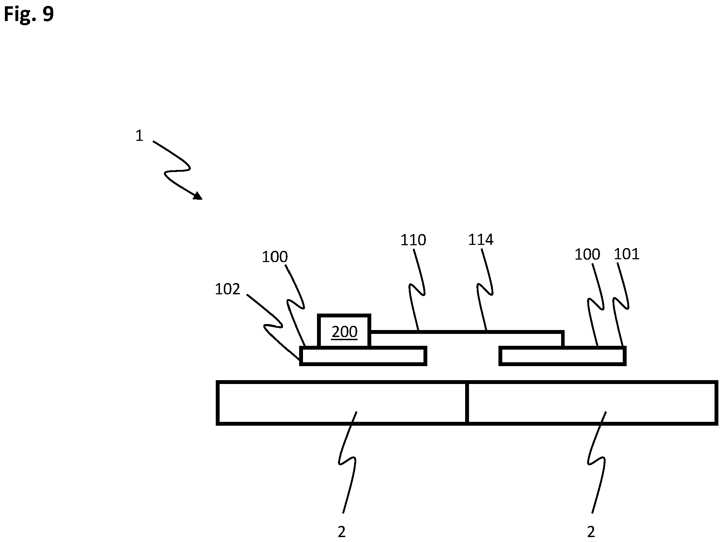

Fig. 9 zeigt eine Seitenansicht eines Planarantriebssystems 1, bei dem ebenfalls mittels einer Koppelvorrichtung 110 eine Verbindung zwischen einem ersten Läufer 101 und einem zweiten Läufer 102 bereitgestellt wird. Die Koppelvorrichtung 110 ist dabei als Schiebestange 114 ausgestaltet und eingerichtet, durch eine Bewegung des ersten Läufers 101, wobei die Schiebestange 114 mit dem ersten Läufer 101 verbunden ist, ein Element 200, welches sich auf dem zweiten Läufer 102 befindet, auf dem zweiten Läufer 102 zu bewegen. Die Bewegung des Elements 200 kann dabei ein Umsetzen oberhalb des zweiten Läufers 102 oder aber auch ein Herunterschieben vom zweiten Läufer 102 beinhalten.

Das Element 200 kann dabei beispielsweise ein mittels des Planarantriebssystems 1 transportiertes Produkt sein.

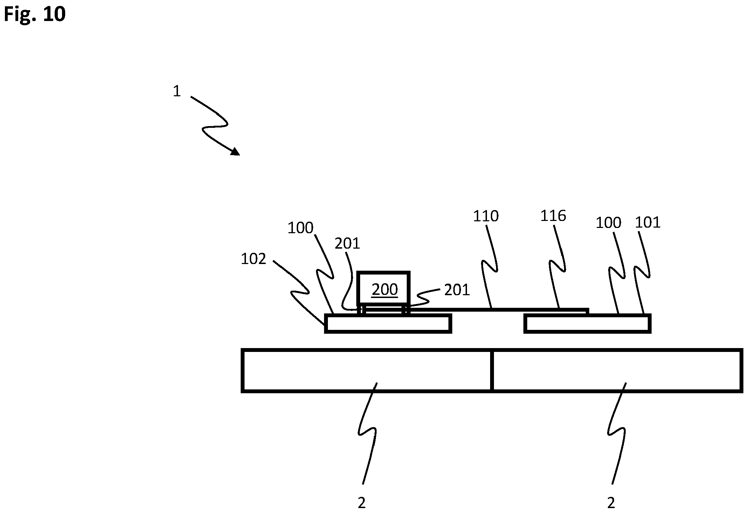

Fig. 10 zeigt eine Seitenansicht eines Planarantriebssystems 1, bei der die Koppelvorrichtung 110 als Anhebevorrichtung 116 ausgestaltet ist. Das auf dem zweiten Läufer 102 angeordnete Element 200, welches auf Elementvorsprüngen 201 angeordnet ist, kann durch die Anhebevorrichtung 116, die mit dem ersten Läufer 101 verbunden ist, angehoben werden. Dazu wird die Anhebevorrichtung 116 unter das Element 200 bewegt und anschließend der erste Läufer 101 angehoben und/oder der zweite Läufer 102 abgesenkt. In dem Moment, in dem die Anhebevorrichtung 116 das Element 200 berührt, ist eine Verbindung zwischen dem ersten Läufer 101 und dem zweiten Läufer 102 ausgebildet und der erste Läufer 101 und der zweite Läufer 102 werden relativ zueinander koordiniert bewegt. Das Element 200 kann wieder ein transportiertes Produkt sein.

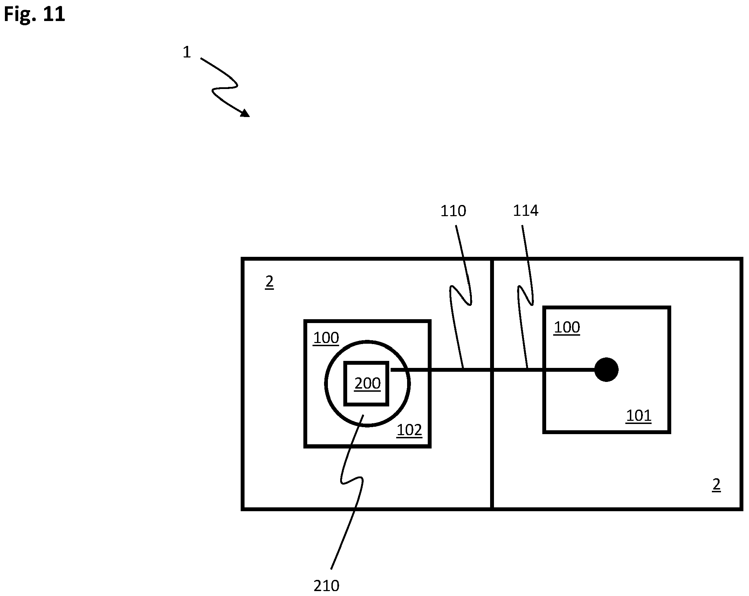

Fig. 11 zeigt eine Draufsicht auf ein Planarantriebssystem 1, bei dem eine Koppelvorrichtung 110 wiederum als Schiebestange 114 ausgestaltet und mit einem ersten Läufer 101 verbunden ist. Auf einem zweiten Läufer 102 ist ein Element 200, welches wiederum ein Produkt sein kann, angeordnet, wobei das Element 200 auf einem Drehtisch 210 angeordnet ist. Durch die Schiebestange 114 kann das Element 200 mittels des Drehtischs 210 auf dem zweiten Läufer 102 gedreht werden. In dem Moment, in dem die Schiebestange 114 das Element 200 berührt, ist wiederum die Verbindung zwischen dem ersten Läufer 101 und dem zweiten Läufer 102 hergestellt und es findet eine koordinierte Bewegung des ersten Läufers 101 und des zweiten Läufers 102 relativ zueinander statt. Ferner kann vorgesehen sein, dass der Drehtisch 210 einen (nicht dargestellten) Vorsprung aufweist, an dem die Schiebestange 114 angesetzt werden kann. Dadurch kann das Element 200 gedreht werden, ohne von der Schiebestange 114 berührt zu werden.

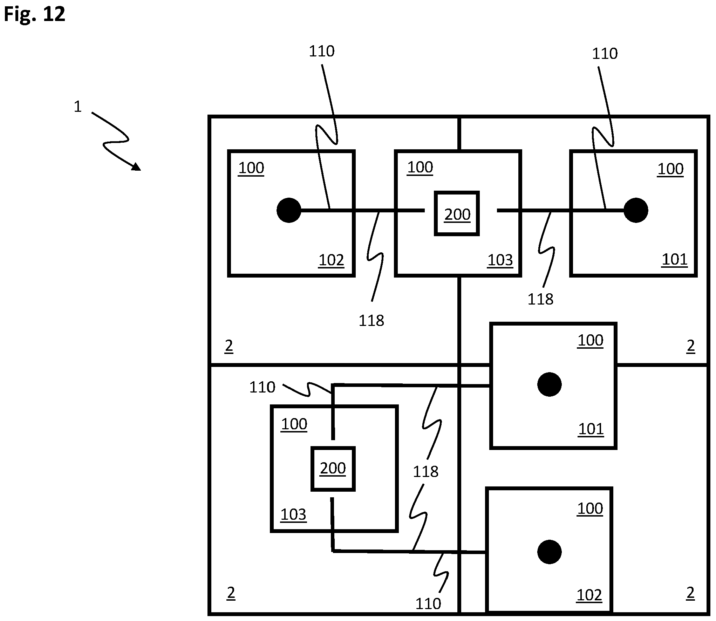

Fig. 12 zeigt eine Draufsicht auf ein Planarantriebssystem 1, bei dem ebenfalls ein erster Läufer 101 mit einem zweiten Läufer 102 verbunden ist und der erste Läufer 101 und der zweite Läufer 102 koordiniert bewegt werden. Ein Element 200, welches wiederum ein vom Planarantriebssystem 1 bewegtes Produkt sein kann, ist auf einem dritten Läufer 103 angeordnet. Der erste Läufer 101 und der zweite Läufer 102 weisen jeweils eine Klemmstange 118 auf, mit der das Element 200 eingeklemmt werden kann. Nach dem Einklemmen kann der dritte Läufer 103 wegbewegt und das Element 200 anschließend vom ersten Läufer 101 und dem zweiten Läufer 102 gehalten werden und beispielsweise an eine weitere Verarbeitungsstation oder an einen weiteren Läufer (jeweils nicht dargestellt) übergeben werden. In Fig. 12 sind mehrere solche Systeme aus erstem Läufer 101, zweitem Läufer 102 und drittem Läufer 103 dargestellt, die sich in der Form der Klemmstange 118 unterscheiden. In der oberen Darstellung ist die Klemmstange 118 jeweils gerade, in der unteren Darstellung jeweils gewinkelt ausgeführt.

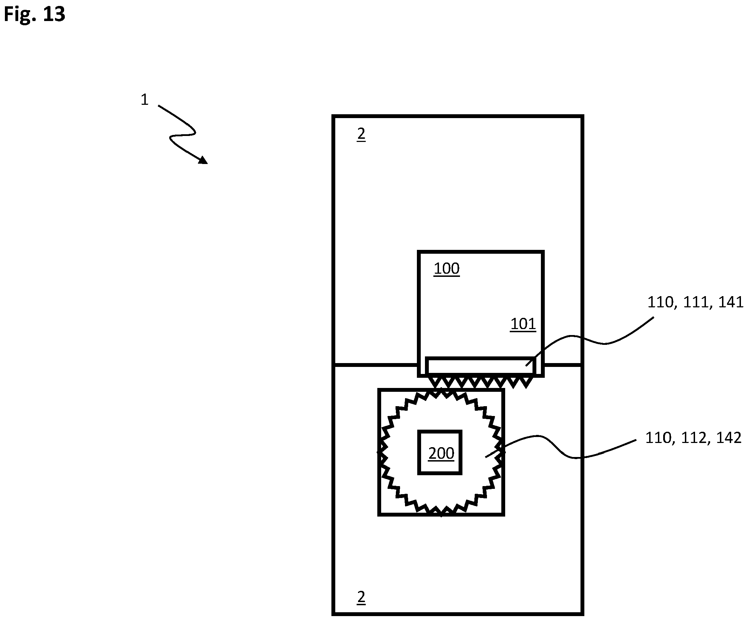

Fig. 13 zeigt eine Draufsicht auf ein Planarantriebssystem 1, bei dem das erste Koppelelement 111 der Koppelvorrichtung 110 des ersten Läufers 101 als Zahnstange 141 ausgestaltet ist. Das zweite Koppelelement 112 der Koppelvorrichtung 110 des zweiten Läufers 102 ist als Zahnradscheibe 142 ausgestaltet. Ein Element 200 ist auf der Zahnradscheibe 142 angeordnet. Wird der erste Läufer 101 koordiniert am zweiten Läufer 102 entlangbewegt, derart, dass die Zahnstange 141 in die Zahnradscheibe 142 eingreift, so kann mittels dieser Bewegung die drehbar gelagerte Zahnradscheibe 142 auf dem zweiten Läufer 102 gedreht und damit auch das Element 200 gedreht werden. Auch dies erfordert wieder eine koordiniert zueinander ausgeführte Bewegung des ersten Läufers 101 und des zweiten Läufers 102. Der erste Läufer 101 und der zweite Läufer 102 sind wiederum mittels der Koppelvorrichtung 110 verbunden. Ferner kann mittels einer Rotation des zweiten Läufers 102 mit der Zahnradscheibe 142 auch eine auf die Zahnstange 141 übertragene Linearbewegung eines Elements auf dem ersten Läufer 101 erzeugt werden.

Auch dies erfordert wieder eine koordiniert zueinander ausgeführte Bewegung des ersten Läufers 101 und des zweiten Läufers 102. Der erste Läufer 101 und der zweite Läufer 102 sind wiederum mittels der Koppelvorrichtung 110 verbunden.

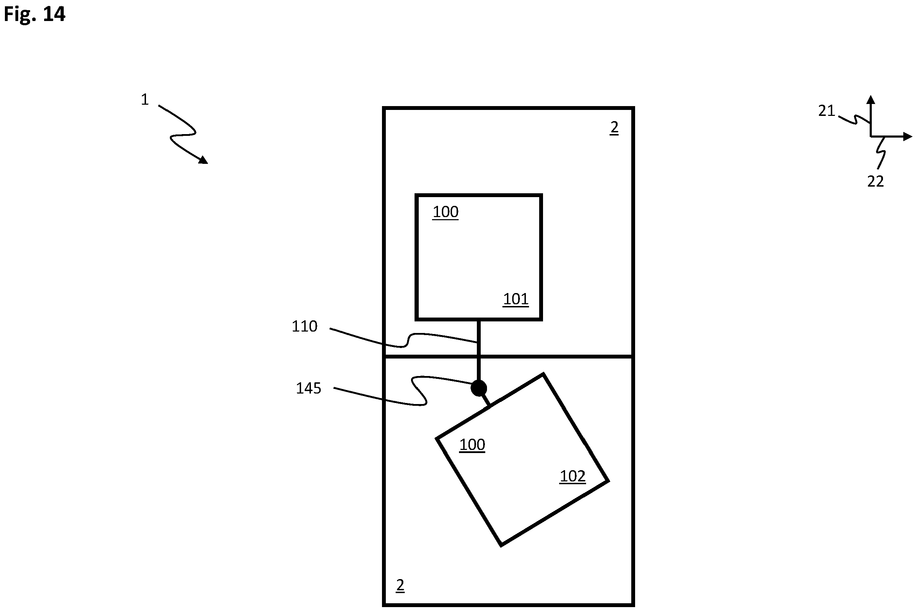

Fig. 14 zeigt ein Planarantriebssystem 1, bei dem die Koppelvorrichtung 110 als Kupplung 145 ausgestaltet ist. Mittels der Kupplung 145 sind der erste Läufer 101 und der zweite Läufer 102 miteinander verbunden. Durch eine Bewegung des ersten Läufers 101 ausschließlich in der ersten Richtung 21 und/oder der zweiten Richtung 22 kann der zweite Läufer 102 um beliebige Rotationswinkel gedreht werden. Dabei kann vorgesehen sein, dass die Kupplung 145 fest oder lösbar ausgestaltet ist.

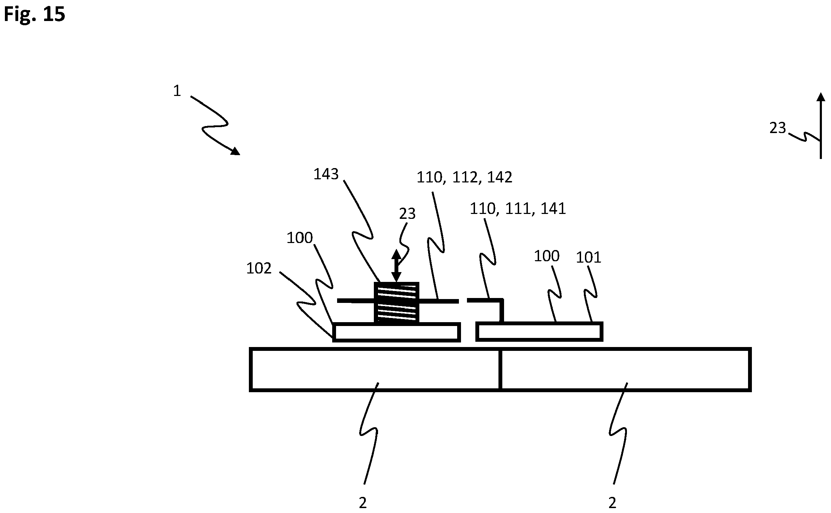

Fig. 15 zeigt eine Seitenansicht eines Planarantriebssystems 1, bei dem die Koppelvorrichtung 110 wieder ein erstes Koppelelement 111 mit einer Zahnstange 141 und ein zweites Koppelelement 112 mit einer Zahnradscheibe 142 umfasst. Die Zahnradscheibe 142 weist dabei ein Innengewinde auf, mittels welchem eine Gewindestange 143 nach oben bzw. unten, also in die dritte Richtung 23 bewegt werden kann. Dies kann beispielsweise dazu genutzt werden, wenn der zweite Läufer 102 auf den Statormodulen 2 aufgesetzt wird, um anschließend mittels der Gewindestange 143 große Hubkräfte beispielsweise zum Stempeln, Pressen oder Klemmen zu erzeugen. Auch hier kann eine Verbindung zwischen dem ersten Läufer 101 und dem zweiten Läufer 102 durch In-Verbindung-Bringen der Zahnstange 141 mit der Zahnradscheibe 142 erfolgen. Ferner kann der erste Läufer 101 mit der Zahnstange 141 auch mehrmals an die Zahnradscheibe 142 geführt werden und so einen Hub der Gewindestange 143 vergrößern.

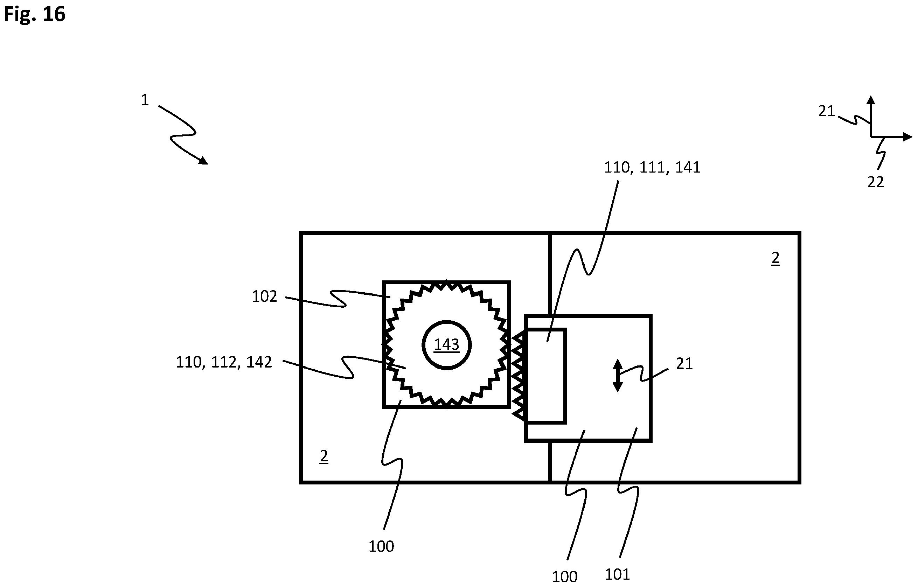

Fig. 16 zeigt eine Draufsicht auf das Planarantriebssystem 1 der Fig. 15. Wird der erste Läufer 101 in der ersten Richtung 21 bewegt, so wird über die Zahnstange 141 und die Zahnradscheibe 142 die Bewegung auf die Gewindestange 143 in eine Bewegung in der dritten Richtung 23 umgesetzt.

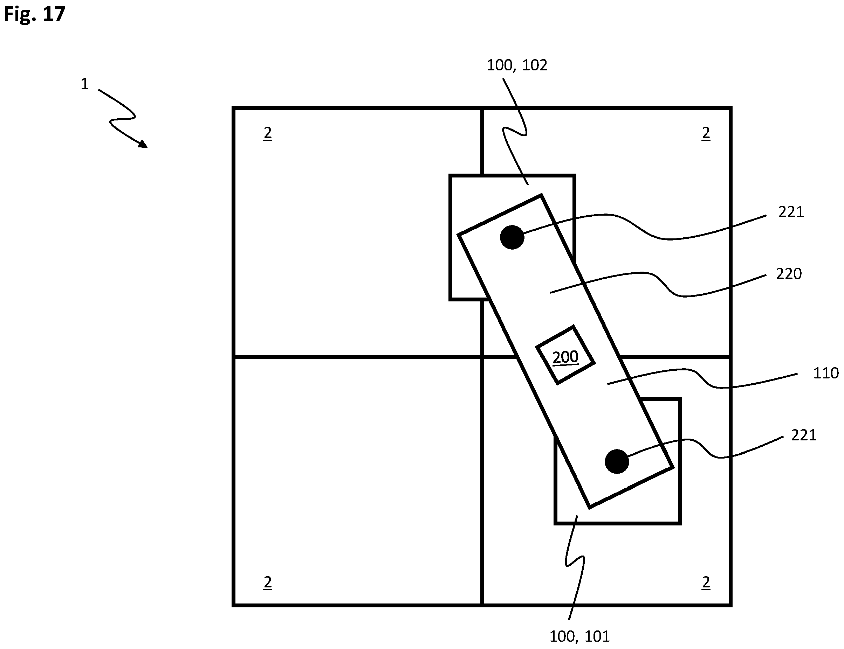

Fig. 17 zeigt eine Draufsicht auf ein Planarantriebssystem 1, bei dem die Koppelvorrichtung 110 zwischen dem ersten Läufer 101 und dem zweiten Läufer 102 als Platte 220, die hier rechteckig ausgestaltet ist, ausgebildet ist. Die Platte 220 ist mittels Drehlagern 221 jeweils mit dem ersten Läufer 101 und dem zweiten Läufer 102 verbunden. Ein auf der Platte 220 angeordnetes Element 200 kann durch eine Bewegung des ersten Läufers 101 und des zweiten Läufers 102 relativ zueinander in jede beliebige Drehposition gebracht werden.

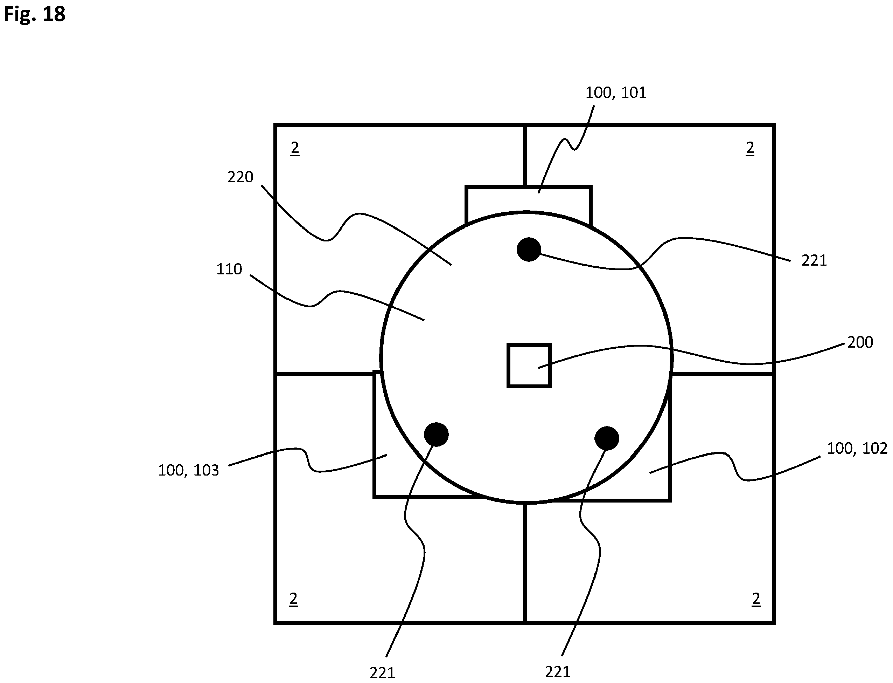

Fig. 18 zeigt eine Draufsicht auf ein Planarantriebssystem 1, das dem Planarantriebssystem 1 der Fig. 17 entspricht, sofern im Folgenden keine Unterschiede beschrieben sind. Die Platte 220 ist in diesem Fall rund ausgestaltet und ferner mit einem dritten Läufer 103 ebenfalls über ein Drehlager 221 verbunden. Auch dies ermöglicht die Rotation des Elements 200 in einem beliebigen Drehwinkel. Analog können in den Ausführungsbeispielen der Figuren 17 und 18 auch mehr als zwei bzw. drei Läufer 100 vorgesehen werden. Je größer die Anzahl der verwendeten Läufer 100 wird, um so schwerer kann auch das Element 200 sein.

Das Element 200 auf der Platte 220 der Planarantriebssysteme 1 der Fig. 17 und 18 kann wiederum ein mit dem Planarantriebssystem 1 bewegtes Produkt sein.

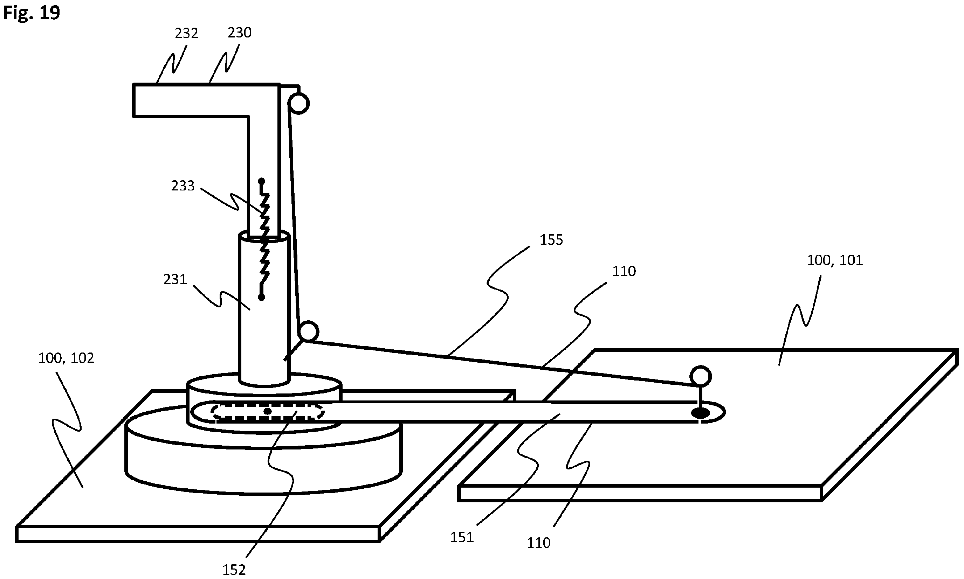

Fig. 19 zeigt eine isometrische Ansicht eines ersten Läufers 101 und eines zweiten Läufers 102. Auf dem zweiten Läufer 102 ist ein drehbar gelagerter Kran 230 angeordnet. Zwischen dem ersten Läufer 101 und dem zweiten Läufer 102 ist eine Koppelvorrichtung 110 angeordnet. Die Koppelvorrichtung 110 weist eine Verbindungsstange 151 auf, welche mit einem Langloch 152 an dem drehbar gelagerten Kran 230 angeordnet ist. Mittels des Langlochs 152 kann dabei der erste Läufer 101 auf den zweiten Läufer 102 zubewegt oder von ihm wegbewegt werden, ohne eine Drehbewegung des drehbar gelagerten Krans 230 auszulösen. Dies kann erfolgen, ohne dass sich der zweite Läufer 102 bewegt. Die Koppelvorrichtung 110 umfasst ferner eine Seilverbindung 155, wobei durch eine Bewegung des ersten Läufers 101 weg vom zweiten Läufer 102 mittels der Seilverbindung 155 der drehbar gelagerte Kran 230 abgesenkt und durch eine Bewegung des ersten Läufers 101 hin zum zweiten Läufer 102 der drehbar gelagerte Kran 230 angehoben wird. Um dies zu unterstützen, ist ferner eine Feder 233 angeordnet, mit der ein oberes Element 232 aus einem unteren Element 231 herausgedrückt wird, wobei das untere Element 231 mit dem zweiten Läufer 102 verbunden ist. Durch die über die Seilverbindung 155 übertragene Kraft gegen die Feder 233 kann das obere Element 232 entsprechend abgesenkt werden. Anstelle der Seilverbindung 155 kann auch eine Schnur und/oder ein Draht verwendet werden. Der drehbar gelagerte Kran 230 kann mittels einer koordinierten Bewegung des ersten Läufers 101 relativ zum zweiten Läufer 102 um den zweiten Läufer 102 herum entsprechend gedreht werden. Somit kann durch eine Bewegung des ersten Läufers 101 sowohl die Höhe des Krans mittels der Seilverbindung 155 als auch eine Drehausrichtung des Krans 230 mittels der Relativbewegung des ersten Läufers 101 eingestellt werden.

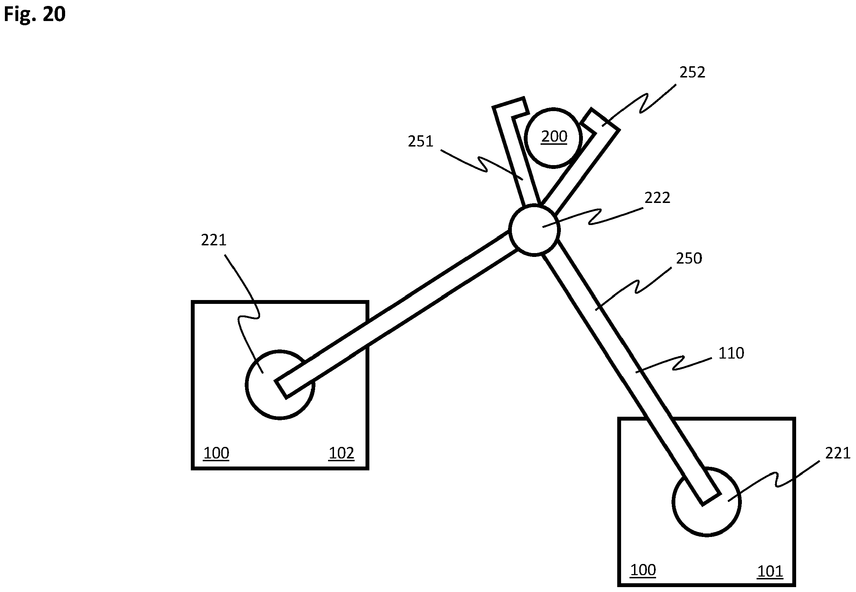

Fig. 20 zeigt eine Draufsicht auf zwei Läufer 100, die ebenfalls mit einer Koppelvorrichtung 110 verbunden sind. Die Koppelvorrichtung 110 umfasst ein Scherenelement 250 mit einem ersten Greifer 251 und einem zweiten Greifer 252. Der erste Greifer 251 und der zweite Greifer 252 sind mittels eines Drehelements 222 miteinander verbunden. Der erste Greifer 251 ist ferner über ein Drehlager 221 mit dem ersten Läufer 101 und der zweite Greifer 252 mittels eines Drehlagers 221 mit dem zweiten Läufer 102 verbunden. Durch eine koordiniert ausgeführte Relativbewegung des ersten Läufers 101 und des zweiten Läufers 102 können nun der erste Greifer 251 und der zweite Greifer 252 geöffnet und geschlossen werden, wobei dies zum Halten eines Elements 200 genutzt werden kann.

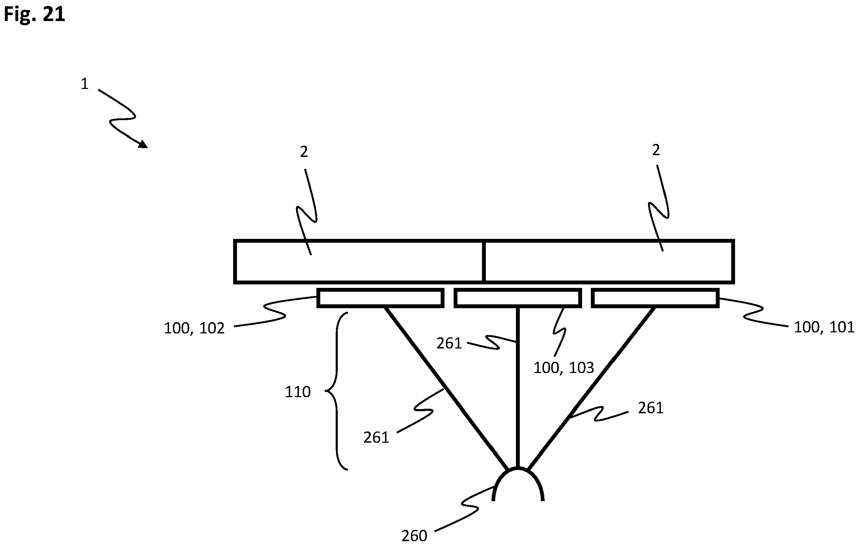

Fig. 21 zeigt eine Seitenansicht eines Planarantriebssystems 1, wobei in diesem Fall die Läufer 100 unterhalb der Statormodule 2 angeordnet sind. Dies ist grundsätzlich möglich, da mittels der Statormagnetfelder auch eine entsprechende Haltekraft für die Magnetfelder der Magneteinheiten 105 bereitgestellt werden kann. Ein erster Läufer 101 ist mit einem zweiten Läufer 102 über eine Koppelvorrichtung 110 verbunden. Die Koppelvorrichtung 110 ist ferner mit einem dritten Läufer 103 verbunden. Die Koppelvorrichtung 110 weist ferner einen Greifer 260 auf, der mit jeweils einer Greiferstange 261 mit dem ersten Läufer 101, dem zweiten Läufer 102 und dem dritten Läufer 103 verbunden ist. Durch eine Relativbewegung der Läufer 100 zueinander kann eine Position des Greifers 260 und auch ein Öffnungswinkel des Greifers 260 gesteuert werden. Eine, mehrere oder alle Greiferstangen 261 können auch durch Seile ersetzt werden.

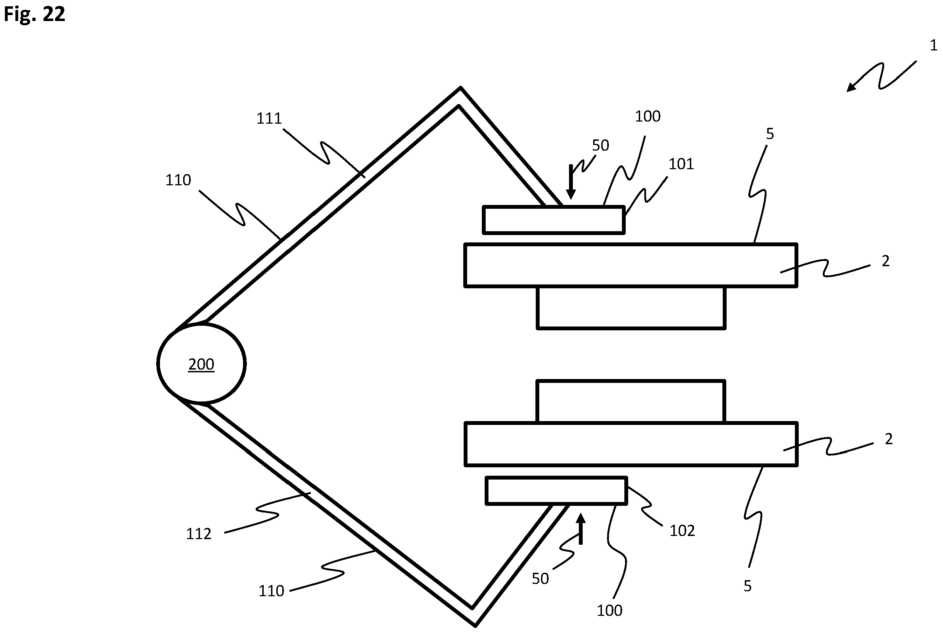

Fig. 22 zeigt eine Seitenansicht eines Planarantriebssystems 1, bei der zwei Statormodule 2 derart gegenüberliegend angeordnet sind, dass der erste Läufer 101 auf einer ersten Seite der Anordnung der beiden Statormodule 2 und ein zweiter Läufer 102 auf einer zweiten Seite der Anordnung der beiden Statormodule 2 angeordnet ist. Die Statorflächen 5 der beiden Statormodule 2 sind dabei parallel zueinander. Die Koppelvorrichtung 110 zwischen dem ersten Läufer 101 und dem zweiten Läufer 102 ist in diesem Fall um die Statormodule 2 geführt und weist wieder ein erstes Koppelelement 111 und ein zweites Koppelelement 112 auf, die über ein gehaltenes Element 200 verbunden sind. Durch eine Bewegung des ersten Läufers 101 und des zweiten Läufers 102 koordiniert zueinander kann eine Position des Elements 200 entsprechend eingestellt werden bzw. das Element 200 auch losgelassen werden. Durch die Statormagnetfelder und die Läufermagnetfelder kann eine Kraft 50 auf die Läufer 100 ausgeübt werden, mit der das erste Koppelelement 111 und das zweite Koppelelement 112 auf das Element 200 einwirken und so das Element 200 festhalten. Bewegt man die Läufer 100 entgegen der in Fig. 22 dargestellten Kraft 50, so kann das Element 200 losgelassen werden.

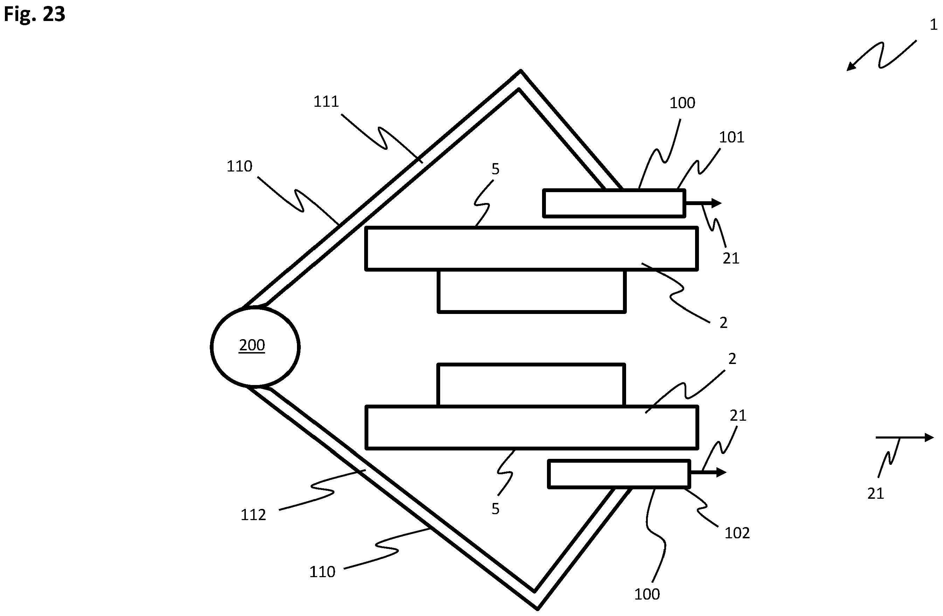

Fig. 23 zeigt das Planarantriebssystem 1 der Fig. 22, nachdem sich der erste Läufer 101 und der zweite Läufer 102 in die erste Richtung 21 bewegt haben.

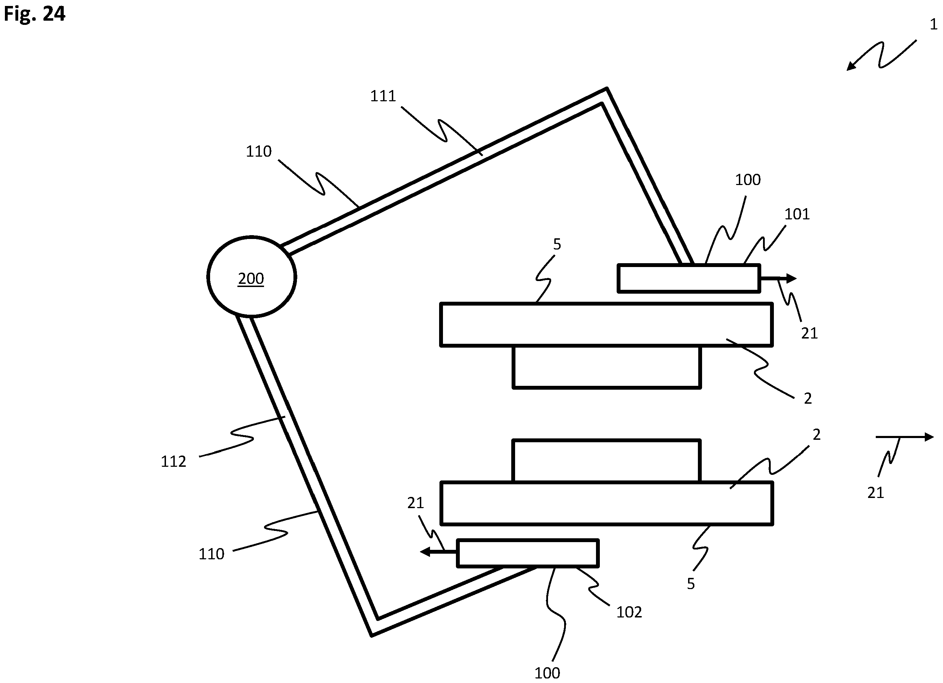

Fig. 24 zeigt das Planarantriebssystem 1 der Fig. 22, nachdem sich der erste Läufer 101 in die erste Richtung 21 und der zweite Läufer 102 entgegengesetzt der ersten Richtung 21 bewegt haben. Der zweite Läufer 102 hat sich also antiparallel zum ersten Läufer 101 bewegt. Dadurch kann das Element 200 angehoben werden in Richtung des ersten Läufers 101.

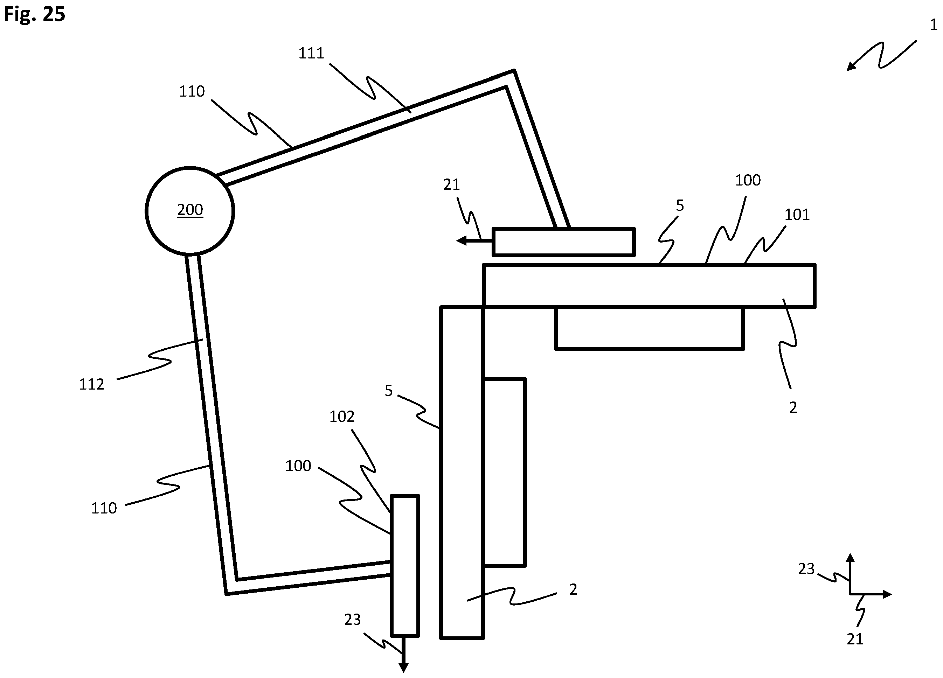

Fig. 25 zeigt eine Seitenansicht eines Planarantriebssystems 1, das ähnlich zum Planarantriebssystem 1 der Figuren 22 bis 24 aufgebaut ist. Die Statormodule 2 sind in diesem Ausführungsbeispiel nicht gegenüberliegend, sondern derart, dass ihre Statorflächen 5 im 90-Grad-Winkel zueinander stehen, angeordnet. Ansonsten kann eine Änderung der Position des Elements 200 wiederum durch eine Bewegung des ersten Läufers 101 bzw. des zweiten Läufers 102 parallel zur jeweiligen Statorfläche 5 erfolgen. Ferner sind auch andere Winkel der Statorflächen 5 zueinander möglich.

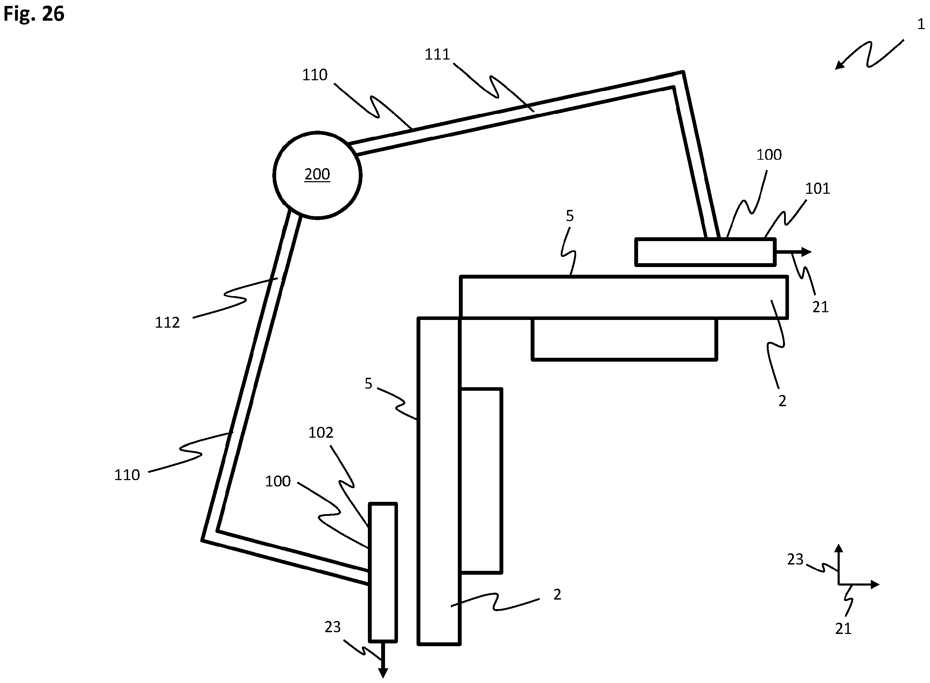

Fig. 26 zeigt das Planarantriebssystem 1 der Fig. 25, nachdem der erste Läufer 101 und der zweite Läufer 102 entsprechend bewegt wurden.

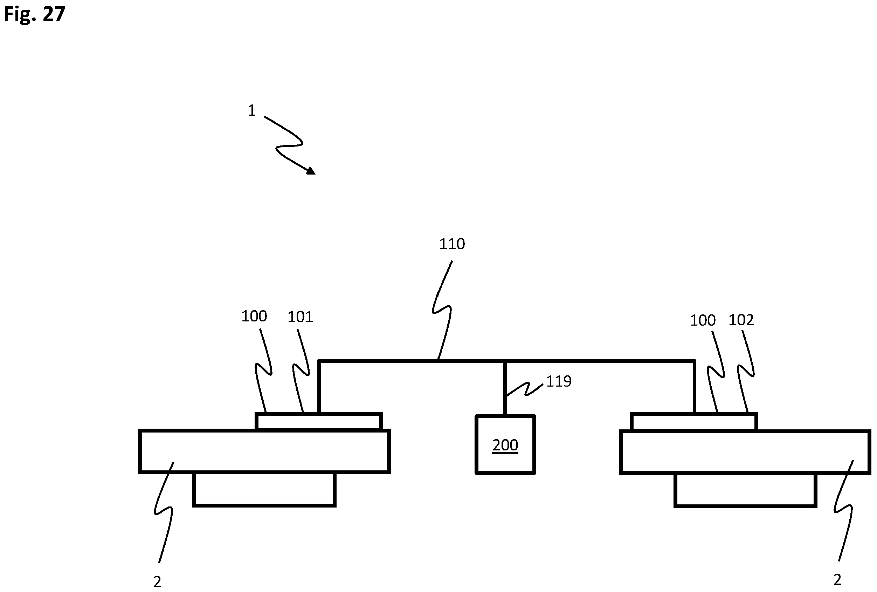

Fig. 27 zeigt eine Seitenansicht eines Planarantriebssystems 1, bei dem ein erster Läufer 101 und ein zweiter Läufer 102 mittels einer Koppelvorrichtung 110 miteinander verbunden sind und bei dem der erste Läufer 101 und der zweite Läufer 102 koordiniert bewegt werden können. Der erste Läufer 101 und der zweite Läufer 102 sind dabei jeweils oberhalb eines Statormoduls 2 angeordnet, wobei zwischen diesen Statormodulen 2 ein Spalt angeordnet ist, die Statormodule 2 also beabstandet zueinander angeordnet sind. Ein mit der Koppelvorrichtung 110 verbundenes Halteelement 119 hält ein Element 200, welches wieder ein vom Planarantriebssystem 1 transportiertes Produkt sein kann. In diesem Ausführungsbeispiel kann es vorgesehen sein, dass das Element 200 durch den Spalt zwischen den Statormodulen 2 zugänglich ist, beispielsweise für einen Bearbeitungsschritt oder für eine visuelle Überprüfung, beispielsweise mittels Kamera.

### Bezugszeichenliste

- 1: Planarantriebssystem
- 2: Statormodul
- 3: Statoreinheit
- 4: Spulengruppe
- 5: Statorfläche
- 6: Magnetfeldsensor
- 7: Statormodulgehäuse
- 10: Steuereinheit
- 11: Datenleitung
- 21: erste Richtung
- 22: zweite Richtung
- 23: dritte Richtung
- 50: Kraft
- 100: Läufer
- 101: erster Läufer
- 102: zweiter Läufer
- 103: dritter Läufer
- 105: Magneteinheit
- 110: Koppelvorrichtung
- 111: erstes Koppelelement
- 112: zweites Koppelelement
- 114: Schiebestange
- 116: Anhebevorrichtung
- 118: Klemmstange
- 119: Halteelement
- 121: Ausnehmung
- 122: Vorsprung
- 123: erstes Randelement
- 124: zweites Randelement
- 127: Kammstruktur
- 130: Magnet
- 131: Nordpol
- 132: Südpol
- 141: Zahnstange
- 142: Zahnradscheibe
- 143: Gewindestange
- 145: Kupplung
- 151: Verbindungsstange
- 152: Langloch
- 155: Seilverbindung
- 200: Element
- 201: Elementvorsprung
- 210: Drehtisch
- 220: Platte
- 221: Drehlager
- 222: Drehelement
- 230: Kran
- 231: unteres Element
- 232: oberes Element
- 233: Feder
- 250: Scherenelement
- 251: erster Greifer
- 252: zweiter Greifer
- 260: Greifer
- 261: Greiferstange

## Patentansprüche

1. Planarantriebssystem (1) mit zumindest einer Statoreinheit (3) mit jeweils einer Mehrzahl von Spulengruppen (4) zum Erzeugen eines Statormagnetfelds, einer Statorfläche (5) oberhalb der Statoreinheit (3), sowie mit einem ersten Läufer (101) und einem zweiten Läufer (102), wobei der erste Läufer (101) und der zweite Läufer (102) jeweils eine Mehrzahl von Magneteinheiten (105) zum Erzeugen eines Läufermagnetfelds aufweisen, wobei der erste Läufer (101) und der zweite Läufer (102) oberhalb der Statorfläche (5) mittels einer Wechselwirkung des Statormagnetfelds mit dem Läufermagnetfeld zumindest in einer ersten Richtung (21) und einer zweiten Richtung (22) bewegbar sind, wobei eine Koppelvorrichtung (110) zwischen dem ersten Läufer (101) und dem zweiten Läufer (102) angeordnet ist, wobei mittels der Koppelvorrichtung (110) eine Verbindung zwischen dem ersten Läufer (101) und dem zweiten Läufer (102) ausbildbar ist, wobei das Planarantriebssystem (1) eine Steuereinheit (10) aufweist, wobei die Steuereinheit (10) eingerichtet ist, Steuersignale an die Statoreinheit (3) auszugeben, wobei die Statoreinheit (3) eingerichtet ist, die Spulengruppen (4) anhand der Steuersignale derart zu bestromen, dass mittels des Statormagnetfelds zueinander hinsichtlich der Koppelvorrichtung (110) koordinierte Bewegungen des ersten Läufers (101) und des zweiten Läufers (102) ausgeführt werden, wobei die Verbindung im Betrieb lösbar ist, wobei die Statoreinheit (3) eingerichtet ist, die Spulengruppen (4) anhand der Steuersignale derart zu bestromen, dass die Verbindung gelöst werden kann und wieder ausgebildet werden kann, **dadurch gekennzeichnet, dass**
die Steuereinheit (10) in einem ersten Betriebsmodus und in einem zweiten Betriebsmodus betrieben werden kann, wobei im ersten Betriebsmodus anhand einer Koppelungsinformation die Steuersignale derart ausgegeben werden, dass die Verbindung des ersten Läufers (101) und des zweiten Läufers (102) berücksichtigt wird und wobei im zweiten Betriebsmodus anhand einer Entkoppelungsinformation die Steuersignale derart ausgegeben werden, dass der erste Läufer (101) und der zweite Läufer (102) individuell bewegt werden,
wobei die Festlegung der Koppelungsinformation beziehungsweise die Entkoppelungsinformation auf der Grundlage der Position des ersten Läufers (101) und des zweiten Läufers (102) unter Berücksichtigung einer Abmessung der Koppelvorrichtung (110) erfolgt, wobei in allen Statormodulen (2) vorgesehene Magnetfeldsensoren (6) die Magnetfelder der Magneteinheiten (105) des ersten Läufers (101) und des zweiten Läufers (102) detektieren, um die Position des ersten Läufers (101) und des zweiten Läufers (102) zu bestimmen.

2. Planarantriebssystem (1) nach Anspruch 1, wobei der erste Läufer (101) ein erstes Koppelelement (111) aufweist und der zweite Läufer (102) ein zweites Koppelelement (112) aufweist, wobei das erste Koppelelement (111) und das zweite Koppelelement (112) Teil der Koppelvorrichtung (110) sind, wobei zwischen dem ersten Koppelelement (111) und dem zweiten Koppelelement (112) eine formschlüssige Verbindung und/oder eine mechanisch kraftschlüssige Verbindung und/oder eine magnetisch kraftschlüssige Verbindung ausgebildet werden kann.

3. Planarantriebssystem (1) nach Anspruch 2, wobei das erste Koppelelement (111) und das zweite Koppelelement (112) eine mechanische Kopplung zwischen dem ersten Läufer (101) und dem zweiten Läufer (102) bereitstellen.

4. Planarantriebssystem (1) nach Anspruch 2 oder 3, wobei das erste Koppelelement (111) und das zweite Koppelelement (112) eine magnetische Kopplung zwischen dem ersten Läufer (101) und dem zweiten Läufer (102) bereitstellen.

5. Planarantriebssystem (1) nach einem der Ansprüche 2 bis 4, wobei das erste Koppelelement (111) eine Ausnehmung (121) umfasst, wobei das zweite Koppelelement (112) einen zur Ausnehmung (121) passenden Vorsprung (122) umfasst, wobei die Verbindung dadurch ausgebildet wird, dass der Vorsprung (122) in die Ausnehmung (121) eingesetzt wird.

6. Planarantriebssystem (1) nach Anspruch 5, wobei zum Lösen der Verbindung der erste Läufer (101) und/oder der zweite Läufer (102) aus einer durch die erste Richtung (21) und die zweite Richtung (22) definierten Ebene gekippt werden kann.

7. Planarantriebssystem (1) nach Anspruch 6, wobei zum Lösen der Verbindung der erste Läufer (101) und der zweite Läufer (102) entgegengesetzt zueinander gekippt werden können.

8. Planarantriebssystem (1) nach einem der Ansprüche 2 bis 7, wobei das erste Koppelelement (111) in ein erstes umlaufendes Randelement (123) des ersten Läufers (101) integriert ist und wobei das zweite Koppelelement (112) in ein zweites umlaufendes Randelement (124) des zweiten Läufers (102) integriert ist.

9. Planarantriebssystem (1) nach einem der Ansprüche 2 bis 8, wobei das erste Koppelelement (111) und das zweite Koppelelement (112) Magnete (130) umfassen.

10. Planarantriebssystem (1) nach Anspruch 9, wobei die Magnete (130) des ersten Koppelelements (111) und/oder des zweiten Koppelelements (112) drehbar gelagert sind.

11. Planarantriebssystem (1) nach einem der Ansprüche 1 bis 10, wobei die Koppelvorrichtung (110) eingerichtet ist, durch eine Bewegung des ersten Läufers (101) relativ zum zweiten Läufer (102) eine Bewegung eines auf dem zweiten Läufer (102) angeordneten Elements (200) auszulösen.

12. Verfahren zum Betreiben eines Planarantriebssystems (1) mit zumindest einer Statoreinheit (3) mit jeweils einer Mehrzahl von Spulengruppen (4) zum Erzeugen eines Statormagnetfelds, einer Statorfläche (5) oberhalb der Statoreinheit (3), sowie mit einem ersten Läufer (101) und einem zweiten Läufer (102), wobei der erste Läufer (101) und der zweite Läufer (102) jeweils eine Mehrzahl von Magneteinheiten (105) zum Erzeugen eines Läufermagnetfelds aufweisen, wobei der erste Läufer (101) und der zweite Läufer (102) oberhalb der Statorfläche (5) mittels einer Wechselwirkung des Statormagnetfelds mit dem Läufermagnetfeld zumindest in einer ersten Richtung (21) und einer zweiten Richtung (22) bewegbar sind, wobei eine Koppelvorrichtung (110) zwischen dem ersten Läufer (101) und dem zweiten Läufer (102) angeordnet ist, wobei mittels der Koppelvorrichtung (110) eine Verbindung zwischen dem ersten Läufer (101) und dem zweiten Läufer (102) ausgebildet ist, wobei das Planarantriebssystem (1) eine Steuereinheit (10) aufweist, wobei die Steuereinheit (10) Steuersignale an die Statoreinheit (3) ausgibt, wobei die Statoreinheit (3) die Spulengruppen (4) anhand der Steuersignale derart bestromt, dass mittels des Statormagnetfelds zueinander koordinierte Bewegungen des ersten Läufers (101) und des zweiten Läufers (102) ausgeführt werden, wobei die Statoreinheit (3) die Spulengruppen (4) anhand der Steuersignale derart bestromt, dass die Verbindung gelöst wird und wieder ausgebildet wird,
**dadurch gekennzeichnet, dass**
die Steuereinheit (10) in einem ersten Betriebsmodus und in einem zweiten Betriebsmodus betrieben werden kann, wobei im ersten Betriebsmodus anhand einer Koppelungsinformation die Steuersignale derart ausgegeben werden, dass die Verbindung des ersten Läufers (101) und des zweiten Läufers (102) berücksichtigt wird und wobei im zweiten Betriebsmodus anhand einer Entkoppelungsinformation die Steuersignale derart ausgegeben werden, dass der erste Läufer (101) und der zweite Läufer (102) individuell bewegt werden,
wobei die Festlegung der Koppelungsinformation beziehungsweise die Entkoppelungsinformation auf der Grundlage der Position des ersten Läufers (101) und des zweiten Läufers (102) unter Berücksichtigung einer Abmessung der Koppelvorrichtung (110) erfolgt, wobei in allen Statormodulen (2) vorgesehene Magnetfeldsensoren (6) die Magnetfelder der Magneteinheiten (105) des ersten Läufers (101) und des zweiten Läufers (102) detektieren, um die Position des ersten Läufers (101) und des zweiten Läufers (102) zu bestimmen.

## Claims

1. A planar drive system (1) comprising at least one stator assembly (3) having in each case a plurality of coil groups (4) for generating a stator magnetic field, a stator surface (5) above the stator assembly (3), and comprising a first rotor (101) and a second rotor (102), wherein the first rotor (101) and the second rotor (102) each comprise a plurality of magnet units (105) for generating a rotor magnetic field, wherein the first rotor (101) and the second rotor (102) may be moved above the stator surface (5) at least in a first direction (21) and a second direction (22) with the aid of an interaction of the stator magnetic field with the rotor magnetic field, wherein a coupling device (110) is arranged between the first rotor (101) and the second rotor (102), wherein a connection may be established between the first rotor (101) and the second rotor (102) with the aid of the coupling device (110), wherein the planar drive system (1) comprises a controller (10), wherein the controller (10) is set up to send control signals to the stator assembly (3), the stator assembly (3) being set up to energize the coil groups (4) on the basis of the control signals in such a way that movements of the first rotor (101) and of the second rotor (102) coordinated with one another with respect to the coupling device (110) are carried out with the aid of the stator magnetic field, wherein the stator assembly (3) is arranged to energize the coil groups (4) on the basis of the control signals in such a way that the connection may be released and may be formed again
**characterized in that**
the controller (10) may be operated in a first operating mode and in a second operating mode, wherein in the first operating mode, based on coupling information, the control signals are output in such a way that the connection of the first rotor (101) and the second rotor (102) is taken into account, and wherein in the second operating mode, based on decoupling information, the control signals are output in such a way that the first rotor (101) and the second rotor (102) are moved individually, wherein determining the coupling information or the decoupling information, respectively, is carried out on the basis of the position of the first rotor (101) and of the second rotor (102) taking into account a dimension of the coupling device (110), wherein magnetic field sensors (6) provided in all stator modules (2) detect the magnetic fields of the magnet units (105) of the first rotor (101) and of the second rotor (102) in order to detect the position of the first rotor (101) and of the second rotor (102).

2. The planar drive system (1) according to claim 1, wherein the first rotor (101) comprises a first coupling element (111) and the second rotor (102) comprises a second coupling element (112), wherein the first coupling element (111) and the second coupling element (112) are part of the coupling device (110), wherein between the first coupling element (111) and the second coupling element (112) a form-fit connection and/or a mechanical force-fit connection and/or a magnetic force-fit connection may be embodied.

3. The planar drive system (1) according to claim 2, wherein the first coupling element (111) and the second coupling element (112) provide a mechanical coupling between the first rotor (101) and the second rotor (102).

4. The planar drive system (1) according to claim 2 or 3, wherein the first coupling element (111) and the second coupling element (112) provide a magnetic coupling between the first rotor (101) and the second rotor (102).

5. The planar drive system (1) according to any one of claims 2 to 4, wherein the first coupling element (111) comprises a recess (121), wherein the second coupling element (112) comprises a protrusion (122) matching the recess (121), wherein the connection is formed by inserting the protrusion (122) into the recess (121).

6. The planar drive system (1) according to claim 5, wherein for releasing, the first rotor (101) and/or the second rotor (102) may be tilted out of a plane defined by the first direction (21) and the second direction (22).

7. The planar drive system (1) according to claim 6, wherein the first rotor (101) and the second rotor (102) may be tilted in opposite directions to release the connection.

8. The planar drive system (1) according to any one of claims 2 to 7, wherein the first coupling element (111) is integrated into a first circumferential edge element (123) of the first rotor (101) and wherein the second coupling element (112) is integrated into a second circumferential edge element (124) of the second rotor (102).

9. The planar drive system (1) according to any one of claims 2 to 8, wherein the first coupling element (111) and the second coupling element (112) comprise magnets (130).

10. The planar drive system (1) according to claim 9, wherein the magnets (130) of the first coupling element (111) and/or of the second coupling element (112) are supported in a rotatable manner.

11. The planar drive system (1) according to any one of claims 1 to 10, wherein the coupling device (110) is arranged to trigger a movement of an element (200) arranged on the second rotor (102) by a movement of the first rotor (101) relative to the second rotor (102).

12. A method for operating a planar drive system (1) comprising at least one stator assembly (3) having in each case a plurality of coil groups (4) for generating a stator magnetic field, a stator surface (5) above the stator assembly (3), and comprising a first rotor (101) and a second rotor (102), wherein the first rotor (101) and the second rotor (102) each comprise a plurality of magnet units (105) for generating a rotor magnetic field, wherein the first rotor (101) and the second rotor (102) may be moved above the stator surface (5) at least in a first direction (21) and a second direction (22) with the aid of an interaction of the stator magnetic field with the rotor magnetic field, wherein a coupling device (110) is arranged between the first rotor (101) and the second rotor (102), wherein with the aid of the coupling device (110) a connection is established between the first rotor (101) and the second rotor (102), wherein the planar drive system (1) comprises a controller (10), the controller (10) outputting control signals to the stator assembly (3), the stator assembly (3) energizing the coil groups (4) on the basis of the control signals in such a way that mutually coordinated movements of the first rotor (101) and of the second rotor (102) are carried out with the aid of the stator magnetic field, wherein the stator assembly (3) is arranged to energize the coil groups (4) on the basis of the control signals in such a way that the connection may be released and may be formed again
**characterized in that**
the controller (10) may be operated in a first operating mode and in a second operating mode, wherein in the first operating mode, based on coupling information, the control signals are output in such a way that the connection of the first rotor (101) and the second rotor (102) is taken into account, and wherein in the second operating mode, based on decoupling information, the control signals are output in such a way that the first rotor (101) and the second rotor (102) are moved individually, wherein determining the coupling information or the decoupling information, respectively, is carried out on the basis of the position of the first rotor (101) and of the second rotor (102) taking into account a dimension of the coupling device (110), wherein magnetic field sensors (6) provided in all stator modules (2) detect the magnetic fields of the magnet units (105) of the first rotor (101) and of the second rotor (102) in order to detect the position of the first rotor (101) and of the second rotor (102).

## Revendications

1. Système d'entraînement plan (1), comprenant au moins une unité de stator (3) pourvue respectivement d'une pluralité de groupes de bobines (4) pour générer un champ magnétique de stator, une surface de stator (5) au-dessus de l'unité de stator (3), ainsi qu'un premier rotor (101) et un second rotor (102), dans lequel le premier rotor (101) et le second rotor (102) présentent respectivement une pluralité d'unités magnétiques (105) pour générer un champ magnétique de rotor, dans lequel le premier rotor (101) et le second rotor (102) peuvent être déplacés au-dessus de la surface de stator (5) au moyen d'une interaction du champ magnétique de stator avec le champ magnétique de rotor au moins dans une première direction (21) et une seconde direction (22), dans lequel un dispositif de couplage (110) est disposé entre le premier rotor (101) et le second rotor (102), dans lequel le dispositif de couplage (110) permet de réaliser un raccordement entre le premier rotor (101) et le second rotor (102), dans lequel le système d'entraînement plan (1) présente une unité de commande (10), dans lequel l'unité de commande (10) est conçue pour émettre des signaux de commande à l'unité de stator (3), dans lequel l'unité de stator (3) est conçue pour exciter les groupes de bobines (4) à l'aide des signaux de commande de telle sorte qu'au moyen du champ magnétique de stator, des mouvements du premier rotor (101) et du second rotor (102), mutuellement coordonnés par rapport au dispositif de couplage (110), sont exécutés, dans lequel le raccordement peut être défait en cours de fonctionnement, dans lequel l'unité de stator (3) est conçue pour exciter les groupes de bobines (4) à l'aide des signaux de commande de telle sorte que le raccordement peut être défait et peut être rétabli,
**caractérisé en ce que** l'unité de commande (10) peut fonctionner dans un premier mode de fonctionnement et dans un second mode de fonctionnement, dans lequel dans le premier mode de fonctionnement, les signaux de commande sont émis à l'aide d'une information de couplage de telle sorte que le raccordement du premier rotor (101) et du second rotor (102) est pris en compte, et dans lequel dans le second mode de fonctionnement, les signaux de commande sont émis à l'aide d'une information de découplage de telle sorte que le premier rotor (101) et le second rotor (102) sont déplacés individuellement,
dans lequel la définition de l'information de couplage ou de l'information de découplage est effectuée sur la base de la position du premier rotor (101) et du second rotor (102) en tenant compte d'une dimension du dispositif de couplage (110), dans lequel des capteurs de champ magnétique (6) prévus dans tous les modules de stator (2) détectent les champs magnétiques des unités magnétiques (105) du premier rotor (101) et du second rotor (102) pour déterminer la position du premier rotor (101) et du second rotor (102) .

2. Système d'entraînement plan (1) selon la revendication 1, dans lequel le premier rotor (101) présente un premier élément de couplage (111), et le second rotor (102) présente un second élément de couplage (112), dans lequel le premier élément de couplage (111) et le second élément de couplage (112) font partie du dispositif de couplage (110), dans lequel un raccordement par complémentarité de forme et/ou un raccordement par adhérence mécanique et/ou un raccordement par adhérence magnétique peuvent être réalisés entre le premier élément de couplage (111) et le second élément de couplage (112).

3. Système d'entraînement plan (1) selon la revendication 2, dans lequel le premier élément de couplage (111) et le second élément de couplage (112) fournissent un couplage mécanique entre le premier rotor (101) et le second rotor (102).

4. Système d'entraînement plan (1) selon la revendication 2 ou 3, dans lequel le premier élément de couplage (111) et le second élément de couplage (112) fournissent un couplage magnétique entre le premier rotor (101) et le second rotor (102).

5. Système d'entraînement plan (1) selon l'une quelconque des revendications 2 à 4, dans lequel le premier élément de couplage (111) comprend un évidement (121), dans lequel le second élément de couplage (112) comprend une saillie (122) correspondant à l'évidement (121), le raccordement étant réalisé en ce que la saillie (122) est placée dans l'évidement (121).

6. Système d'entraînement plan (1) selon la revendication 5, dans lequel pour défaire le raccordement, le premier rotor (101) et/ou le second rotor (102) peut/peuvent être basculé(s) hors d'un plan défini par la première direction (21) et la seconde direction (22).

7. Système d'entraînement plan (1) selon la revendication 6, dans lequel le premier rotor (101) et le second rotor (102) peuvent être basculés l'un à l'opposé de l'autre pour défaire le raccordement.

8. Système d'entraînement plan (1) selon l'une quelconque des revendications 2 à 7, dans lequel le premier élément de couplage (111) est intégré dans un premier élément marginal périphérique (123) du premier rotor (101), et dans lequel le second élément de couplage (112) est intégré dans un second élément marginal périphérique (124) du second rotor (102).

9. Système d'entraînement plan (1) selon l'une quelconque des revendications 2 à 8, dans lequel le premier élément de couplage (111) et le second élément de couplage (112) comprennent des aimants (130).

10. Système d'entraînement plan (1) selon la revendication 9, dans lequel les aimants (130) du premier élément de couplage (111) et/ou du second élément de couplage (112) sont montés rotatifs.

11. Système d'entraînement plan (1) selon l'une quelconque des revendications 1 à 10, dans lequel le dispositif de couplage (110) est conçu pour déclencher par un mouvement du premier rotor (101) par rapport au second rotor (102) un mouvement d'un élément (200) disposé sur le second rotor (102).

12. Procédé permettant de faire fonctionner un système d'entraînement plan (1) comprenant au moins une unité de stator (3) pourvue respectivement d'une pluralité de groupes de bobines (4) pour générer un champ magnétique de stator, une surface de stator (5) au-dessus de l'unité de stator (3), ainsi qu'un premier rotor (101) et d'un second rotor (102), dans lequel le premier rotor (101) et le second rotor (102) présentent respectivement une pluralité d'unités magnétiques (105) pour générer un champ magnétique de rotor, dans lequel le premier rotor (101) et le second rotor (102) peuvent être déplacés au-dessus de la surface de stator (5) au moyen d'une interaction du champ magnétique de stator avec le champ magnétique de rotor au moins dans une première direction (21) et une seconde direction (22), dans lequel un dispositif de couplage (110) est disposé entre le premier rotor (101) et le second rotor (102), dans lequel un raccordement entre le premier rotor (101) et le second rotor (102) est réalisé au moyen du dispositif de couplage (110), dans lequel le système d'entraînement plan (1) présente une unité de commande (10), dans lequel l'unité de commande (10) émet des signaux de commande à l'unité de stator (3), dans lequel l'unité de stator (3) excite les groupes de bobines (4) à l'aide des signaux de commande de telle sorte qu'au moyen du champ magnétique de stator, des mouvements du premier rotor (101) et du second rotor (102), mutuellement coordonnés par rapport au dispositif de couplage (110), sont exécutés, dans lequel l'unité de stator (3) excite les groupes de bobines (4) à l'aide des signaux de commande de façon à défaire et à rétablir le raccordement,
**caractérisé en ce que** l'unité de commande (10) peut fonctionner dans un premier mode de fonctionnement et dans un second mode de fonctionnement, dans lequel dans le premier mode de fonctionnement, les signaux de commande sont émis à l'aide d'une information de couplage de telle sorte que le raccordement du premier rotor (101) et du second rotor (102) est pris en compte, et dans lequel dans le second mode de fonctionnement, les signaux de commande sont émis à l'aide d'une information de découplage de telle sorte que le premier rotor (101) et le second rotor (102) sont déplacés individuellement,
dans lequel la définition de l'information de couplage ou de l'information de découplage est effectuée sur la base de la position du premier rotor (101) et du second rotor (102) en tenant compte d'une dimension du dispositif de couplage (110), dans lequel des capteurs de champ magnétique (6) prévus dans tous les modules de stator (2) détectent les champs magnétiques des unités magnétiques (105) du premier rotor (101) et du second rotor (102) pour déterminer la position du premier rotor (101) et du second rotor (102) .
